(19) **Europäisches Patentamt / European Patent Office / Office européen des brevets**

(11) **EP 3 502 627 B1**

(12) **EUROPEAN PATENT SPECIFICATION**

(45) Date of publication and mention of the grant of the patent:
**23.09.2020   Bulletin 2020/39**

(51) Int Cl.:
*G01D 4/00* (2006.01)     *H02J 3/26* (2006.01)

(21) Application number: **17382881.5**

(22) Date of filing: **21.12.2017**

(54) **ASSIGNATION AND CONNECTION OF ELECTRICITY CUSTOMERS TO PHASES OF A DISTRIBUTION FEEDER**

ZUWEISUNG UND VERBINDUNG VON ELEKTRIZITÄTSKUNDEN MIT PHASEN EINER VERTEILUNGSEINSPEISUNG

ATTRIBUTION ET CONNEXION DE CLIENTS CONSOMMATEURS D'ÉLECTRICITÉ AUX PHASES D'UNE DISTRIBUTION D'ALIMENTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2019   Bulletin 2019/26**

(73) Proprietors:
  • **Fundación Tecnalia Research & Innovation**
    **20009 Donostia-San Sebastian, Guipuzcoa (ES)**
  • **Universidad del Pais Vasco - Euskal Herriko Unibertsitatea (UPV/EHU)**
    **48940 Leioa (ES)**

(72) Inventors:
  • **MENDIA, Izaskun**
    **20009 San Sebastián - Guipúzcoa (ES)**
  • **GIL-LOPEZ, Sergio**
    **20009 San Sebastián - Guipúzcoa (ES)**
  • **DEL SER LORENTE, Javier**
    **20009 San Sebastián - Guipúzcoa (ES)**

  • **ARIZAGA, Iñigo**
    **20009 San Sebastián - Guipúzcoa (ES)**
  • **COBELO ECHEVARRIA, Iñigo**
    **2009 San Sebastián - Guipúzcoa (ES)**
  • **OYARZABAL MORENO, José María**
    **2009 San Sebastián - Guipúzcoa (ES)**
  • **GARCIA QUINCOCES, Eduardo**
    **2009 San Sebastián - Guipúzcoa (ES)**
  • **VÉLEZ, Manuel**
    **48940 Leioa (ES)**

(74) Representative: **Balder IP Law, S.L.**
    **Paseo de la Castellana 93**
    **5a planta**
    **28046 Madrid (ES)**

(56) References cited:
    **US-A1- 2009 189 456     US-A1- 2012 078 428**
    **US-A1- 2012 175 951     US-A1- 2014 031 997**
    **US-A1- 2016 315 469**

**Description**

**TECHNICAL FIELD**

The present invention relates to the field of electric low-voltage distribution networks. More specifically, the invention relates to the optimization of the assignation of a plurality of smart meters, associated with electricity customers, to phases of a distribution feeder.

**STATE OF THE ART**

Electricity is generally delivered to customers through a low-voltage distribution network with a three-phase distribution feeder as it results in a distribution with less electric power losses than through a single-phase distribution feeder.

For optimal operation of a three-phase distribution feeder, the three phases thereof should carry a same amount of electric current so as to have a balanced distribution feeder. In most cases, the electricity customers are connected to only one of the three phases by means of a smart meter, hence their power consumption is not shared among the three phases. When the phases of a distribution feeder are imbalanced between each other (i.e. different amounts of electric current in the phases), problems relating to efficiency and safety may arise in the low-voltage distribution network.

Since in an imbalanced situation more electric current is delivered through at least one of the phases (it could occur that two phases deliver significantly more electric current than a third phase), this at least one phase is prone to overloads that may cause the distribution feeder and cables thereof to overheat. Further, imbalance between phases leads to greater technical losses. Since the load curve reports the measured energy consumption, the technical power losses for an imbalanced system where all energy is conducted over a single phase, technical power losses will increase up to three time the losses of a perfectly balanced system. The quantification of how these technical losses affect, in contrast to the cost of reallocation, is another aspect to be taken into account. These problems lead to greater electric power losses, worse quality of the electricity supplied to customers due to fluctuating voltage, and higher risk of faults occurring in the distribution feeder.

One of the reasons why such current imbalance exists is that the topology of the low-voltage distribution network is not always known: sometimes it is unclear to which phase a customer is electrically connected to (a majority of the customers has electricity supplied thereto by means of a single phase, that is, the majority of the customers are single-phase customers). Besides, even if the topology of the network were to be perfectly known, each electricity customer is generally connected to a phase based on the purchased power of the customer (something which does not reflect when and how much power will be consumed), and/or a statistical profile of power consumption of the customer. Such distribution of electricity customers among the available phases, however, does not provide an optimized topology of the low-voltage distribution network since the aggregate power consumption often leads to imbalanced phases due to the different time variability of the consumption patterns of the users assigned to different phases of a distribution feeder.

Another problem that may happen in distribution feeders is that customers with similar electrical load patterns (in what regards time intervals in which more power is consumed and time intervals in which less power is consumed) are connected to a same phase. Therefore, the capacity of the distribution feeders in the low-voltage distribution network is reduced and the probability of voltage fluctuation increases as many demands for power often coincide at particular moments of the day. The phase to which these electricity customers are connected delivers electric power such that large differences exist between the maximums and the minimums of the aggregate electric power delivered (over a period of time such as one day, for example) thereby reducing the customer capacity of the distribution feeders. That is to say, since each phase must withstand the concurrent demands for power, fewer electricity customers may be connected to each phase.

With the progressive installation of smart meters, the power consumption of each electricity customer can be metered for each time interval, for example every 15 minutes, 30 minutes, 1 hour, etc. This makes possible to charge the customers more accurately based on the real power they have consumed, but in addition it also provides more information regarding how the power is consumed at the end of the low-voltage distribution network. Accordingly, the information may be used for improving the assignation of users to phases of a distribution feeder.

For example, in Li Xiaoming et al, "The statistical algorithm of simultaneity coefficient based on real-time data of typical customers from power measurement system", Proceedings. International Conference on Power System Technology, 2002, pp. 2247-2250 vol.4, there is described how to compute statistically the simultaneity coefficient in distribution networks using such information. The simultaneity coefficient measures the affection of aggregate electrical load pattern of the distribution feeder to the individual maximums of electrical load patterns. This computed simultaneity coefficient can be taken into account when customers are assigned to phases of a distribution feeder, but as the computation depends on atemporal statistical distributions, the assignation of customers is not based on the time when the power is consumed.

Patent document US 2016/315469 A1, which describes features according to the preamble of the present claimed invention, discloses a method for determining the structure of an electricity transmission grid making it possible to determine the structure of the electricity transmission grid. In the method, connection parameters are determined for electricity consumers indicating an identifier of the feeder to which each electricity consumer is connected.

Patent document US 2012/175951 A1 describes solutions for balancing loads in a distribution power supply system where each meter is connected on one of the three phases of the distribution power supply system.

Patent document US 2014/031997 A1 describes predictive phase balancing based on customer demand profiles from each customer serviced by a poly-phase grid network. The balancing technique creates a demand forecast from anticipated power demands collected from the customer demand profiles and balances the loads based on the demand forecast.

There is an interest in providing a way in which electricity customers (the smart meters thereof) are assigned to phases of a distribution feeder of low-voltage distribution networks, based on the electrical load patterns associated therewith, that may increase the efficiency, the quality of service (QoS) and/or the safety of the distribution feeder.

## DESCRIPTION OF THE INVENTION

The methods, devices and systems of the present disclosure are intended to solve some or all of the aforementioned problems.

A first aspect of the invention relates to a method for assigning a plurality of smart meters to phases of a distribution feeder comprising three phases, each smart meter having an electrical load pattern associated therewith, the method being defined in claim 1.

For each smart meter of the plurality of smart meters, the smart meter is assigned to one phase of the three phases that minimizes one of:

a sum of residuals of all pairs of phases of the three phases resulting from assigning the electrical load pattern of the smart meter to the one phase; and
a sum of mean crest factors of the three phases resulting from assigning the electrical load pattern of the smart meter to the one phase.

The electrical load patterns indicate how each electricity customer has consumed electric power in the past, and based on the electrical load patterns each electricity customer can be assigned to a phase of the distribution feeder for improving the efficiency and the quality of service of the same. In this sense, each electricity customer generally has a plurality of electrical loads that consume power continuously or intermittently, and the overall power consumed is reflected in the electrical load pattern metered by the corresponding smart meter.

By assigning each smart meter to a phase of the distribution feeder such that the electrical load pattern associated with the smart meter minimizes the sum of the resulting residuals of all pairs of phases of the distribution feeder (each phase having the aggregate of all electrical load patterns of the smart meters assigned and/or connected thereto), the electrical losses in the distribution feeder (according to the extrapolated statistical model of the electrical load patterns) will be reduced due to more balanced aggregated electrical load patterns between phases thereof. Further, less electric current will go through the neutral wire in those embodiments in which the distribution feeder comprises one.

On the other hand, by complementing electrical peak loads (according to the electrical load patterns) in each phase such that the sum of the resulting mean crest factors is minimized, the quality of the electric power delivered to the customers is improved and the capacity of the distribution feeder is increased due to tendency of the aggregated electrical load pattern of the phases to flatten. A flatter aggregated electrical load pattern results in smaller fluctuations of voltage taking place between different phases. Also, a flatter aggregated electrical load pattern of a phase does not get as close to the capacity for delivering electric power of the phase.

The assignation of smart meters to phases of the distribution feeder is simple and, thus, more cost-effective than other methods for optimizing a distribution feeder as at each assignation of an unassigned smart meter of the plurality of smart meters to a phase, the optimum assignation for that unassigned smart meter is made: the smart meter is assigned to the phase that provides the minimum sum of the resulting residuals of all pairs of phases or the minimum sum of the resulting mean crest factors of all the three phases (the term "resulting" referring to the residuals or crest factors that may be computed after a smart meter is or were to be assigned to a phase and the electrical load pattern of said smart meter is or were to be added to that phase). This, in turn, makes the method scalable and to be carried out regardless of whether a prior distribution of smart meters to phases of the distribution feeder is already in place (i.e. smart meters were already assigned and/or connected to phases of the distribution feeder).

The method makes possible to assign any additional smart meter that must be assigned to a phase of the distribution feeder such that its associated electrical load pattern minimizes the sum of resulting residuals and/or the sum of resulting mean crest factors, thereby improving the existing distribution feeder.

As a plurality of smart meters is assigned, at each iteration of the method the sum to be minimized upon assignation of the smart meter may not be the same as in previous or subsequent iterations. Namely, one, some or all unassigned smart meters may be assigned to a phase so as to minimize the sum of resulting residuals of all pairs of phases of the three phases whereas one, some or all other unassigned smart meters may be assigned to a phase so as to minimize the sum of resulting mean crest factors of all three phases. This results in an assignation of smart meters that intends to compensate part of the residuals between pairs of phases (of an unbalanced distribution feeder) and part of the mean crest factors of all three phases (due to peaky aggregate electrical load patterns). In the context of the present disclosure the term "unassigned smart meter" only denotes a smart meter of the plurality of smart meters that has not been assigned to a phase of the distribution feeder yet; the terms "smart meter" and "unassigned smart meter" are interchangeably used in the present disclosure.

After each iteration, the next unassigned smart meter is assigned to a phase of the distribution feeder taking into account the electrical load patterns of the smart meters previously assigned thereto, and thus the variations in the residuals and crest factors of the phases.

The method provides a list with the assignations of smart meters to phases of the distribution feeder. For example, but without limitation, the method provides a document with said list, a digital file with said list for inspection by an operator, or a digital file with said list for a device that automatically makes/switches electrical connections between smart meters and phases based on the digital file, etc.

Each electrical load pattern comprises a time-series of discrete values, and each of these values corresponds to a power consumed in a time interval according to a selected time discretization. A residual of a pair of phases comprises a time-series of discrete values that is obtained by computing the Euclidean distance between the aggregated electrical load pattern of the first and second phases of the pair of phases; the aggregated electrical load pattern of each phase is a time-series of discrete values that is computed as the sum of all the individual electrical load patterns assigned and/or connected to that phase.

Each residual between phases that is used in the sum of resulting residuals to be minimized is a scalar value corresponding to the squared root mean value of the time-series of discrete values of each residual.

Each crest factor of a phase is computed as the mean value of the ratios between peak values of the aggregated electrical load pattern thereof and root mean square values of the aggregated electrical load pattern thereof over a given period of time (e.g. 24 hours).

Each time-series of discrete values may be represented as an array of values.

The method further comprises, for each smart meter of the plurality of smart meters and prior to assigning the smart meter to the one phase of the three phases, selecting the smart meter of the plurality of smart meters that minimizes one of:

a Euclidean distance between the electrical load pattern of the smart meter and a residual of a first pair of phases of the three phases with respect to any other Euclidean distance between an electrical load pattern of any unassigned smart meter of the plurality of smart meters and a residual of any pair of phases of the three phases, the first pair of phases comprising the one phase; and

a sum of the mean crest factors of the three phases resulting from assigning the electrical load pattern of the smart meter to the one phase with respect to any other sum of the mean crest factors of the three phases resulting from assigning the electrical load pattern of any unassigned smart meter of the plurality of smart meters to any phase of the three phases.

Further, in these preferred embodiments, assigning the smart meter to the one phase of the three phases minimizes:

the sum of residuals of all pairs of phases of the three phases if the smart meter has been selected such that the Euclidean distance is minimized; or

the sum of mean crest factors of the three phases if the smart meter has been selected such that the sum of the resulting mean crest factors is minimized.

At each iteration of the method, prior to assigning an unassigned smart meter to the one phase, a particular unassigned smart meter is selected for assigning it to the one phase.

By selecting the unassigned smart meter having associated therewith the electrical load pattern that provides the minimum Euclidean distance (with respect to any other Euclidean distance), or that would provide the minimum sum of the resulting mean crest factors (with respect to any other sum of the resulting mean crest factors), the assignation of smart meters to phases of the distribution feeder may be further improved. The selected unassigned smart meter is then assigned to the phase that provides the minimum sum of the resulting residuals between pairs of phases if the unassigned smart meter was selected so as to minimize of the Euclidean distance. If the unassigned smart meter was selected so as to minimize the sum of the resulting mean crest factors of all three phases, the selected unassigned smart meter is assigned to the phase that provides the minimum sum of the resulting mean crest factors of all three phases. Therefore, at each iteration of the method, each smart meter is selected and assigned to a phase according to one of the two most optimal configurations for that iteration.

In some preferred embodiments, assigning the smart meter to the one phase of the three phases is carried out digitally with a greedy algorithm. To this end, the method may further comprise running the greedy algorithm on a processor of a computing device, for example.

The method can be implemented digitally with a greedy algorithm (i.e. an algorithm that carries out a greedy methodology as described in the present disclosure) that provides one of the two optimal assignations possible at each iteration. At each iteration an assignation of a smart meter is made and thus the total number of iterations is equal to the total number of smart meters to be assigned. The assignation is made so as to minimize at least one of: the sum of the residuals of all pairs of phases of the three phases resulting from assigning the electrical load pattern of the unassigned smart meter of each iteration to the one phase, and the sum of the mean crest factors of the three phases resulting from assigning the electrical load pattern of the unassigned smart meter of each iteration to the one phase.

In some of these preferred embodiments, selecting the smart meter of the plurality of smart meters is further carried out digitally with the greedy algorithm.

The greedy algorithm may also select the unassigned smart meter that minimizes one of: the Euclidean distance between the electrical load pattern of the unassigned smart meter and the residual of the first pair of phases of the three phases, and the sum of the mean crest factors of the three phases resulting from assigning the electrical load pattern of the unassigned smart meter to the one phase. Then, the selected unassigned smart meter is assigned, by the greedy algorithm, to the phase that results in the global minimum, for that iteration, of the sum of the resulting residuals or the sum of the resulting mean crest factors.

In some preferred embodiments, selecting the smart meter of the plurality of smart meters minimizes a Euclidean distance between the electrical load pattern of the smart meter and the residual of the first pair of phases of the three phases with respect to any other Euclidean distance between the electrical load pattern of any unassigned smart meter of the plurality of smart meters and the residual of any pair of phases of the three phases; and assigning the selected smart meter to the one phase of the three phases is carried out such that the sum of the resulting residuals of all pairs of phases of the three phases is minimized.

The method iterates the selection and assignation of unassigned smart meters so as to reduce, according to the electrical load patterns, the electrical losses that are to occur in the distribution feeder and the amount of electric current that is to be present in the neutral wire (if the distribution feeder comprises one). In this sense, at each iteration the smart meter whose electrical load pattern provides the minimum Euclidean distance between the electrical load pattern of the smart meter and the residual of a pair of phases is first selected, and then assigned to the phase that minimizes the sum of the resulting residuals of all pairs of phases.

In some other preferred embodiments, selecting the smart meter of the plurality of smart meters minimizes the sum of the resulting mean crest factors of the three phases with respect to any other sum of mean crest factors of the three phases that would result from assigning any unassigned smart meter of the plurality of smart meters to any phase of the three phases; and assigning the selected smart meter to the one phase of the three phases is carried out such that the sum of the resulting mean crest factors of the three phases is minimized.

The method iterates the selection and assignation of unassigned smart meters of the plurality of smart meters so as to reduce, according to the electrical load patterns, drops of voltage between the different phases and the number of concurrent demands for peak power on a single phase. In this sense, at each iteration the unassigned smart meter whose electrical load pattern would provide the minimum sum of the resulting mean crest factors of all three phases is first selected, and then assigned to the phase that minimizes the sum of the resulting mean crest factors of all three phases.

In some embodiments, the method further comprises:

for each pair of phases of the three phases and for each smart meter of the plurality of smart meters assigned to one of the phases thereof, computing the Euclidean distance between the electrical load pattern of the smart meter and a residual of the pair of phases; and

selecting the smart meter of the electrical load pattern with the minimum Euclidean distance and assigning the smart meter to the other phase of the pair of phases if the resulting residual of the pair of phases decreases.

Even if all the smart meters are assigned to phases of the distribution feeder, it may occur that by reassigning one or more smart meters to different phases the operation of the distribution feeder may be further improved. This may be the case, for example, of a distribution feeder having smart meters assigned and/or connected to phases thereof prior to assigning unassigned smart meters with the method of the present disclosure.

For each pair of phases, the Euclidean distance between the electrical load pattern of each smart meter assigned to one of the phases thereof and the corresponding residual of the pair of phases is computed so as to locally (within the same pair of phases) attempt to reassign any of the smart meters to further minimize the corresponding residual of the pair of phases.

In some embodiments, the method further comprises, for each smart meter of the plurality of smart meters, obtaining the electrical load pattern associated therewith.

The smart meters accurately meter the real power consumption of each customer, thereby providing the electrical load pattern.

In some embodiments, the method further comprises, prior to start assigning unassigned smart meters of the plurality of smart meters to phases of the distribution feeder, disconnecting at least one smart meter connected to a phase of the distribution feeder thereby providing at least one unassigned smart meter.

When the distribution feeder has smart meters connected to phases thereof prior to assigning unassigned smart meters with the method of the present disclosure, it may be advantageous to disconnect at least one of said smart meters so that it may be assigned to another phase with the present method.

In some embodiments, the method further comprises connecting each smart meter of the plurality of smart meters to the phase assigned.

An operator or a device may perform the electrical connection of each smart meter to the phase assigned in order to effect the assignation of smart meters to phases of the distribution feeder.

In some embodiments, the method further comprises, for each phase of the three phases not having any smart meter assigned thereto, selecting a first unassigned smart meter of the plurality of smart meters and assigning the first unassigned smart meter to the phase. In these embodiments, the first unassigned smart meter has associated therewith a highest aggregate power consumed.

If the distribution feeder has no smart meters assigned thereto, selecting and assigning a smart meter with a highest power consumption to each phase may result in an assignation of smart meters having a minimum sum of residuals of all pairs of phases of the three phases or a minimum sum of mean crest factors of the three phases (once all the smart meters have been assigned) of a lower value than with an assignation of smart meters not starting with smart meters with a highest power consumption. The power consumption may be computed as the sum of powers of the electrical load pattern.

In some embodiments, assigning the smart meter to one phase of the three phases is carried out by running a multi-objective optimization algorithm for assigning each smart meter of the plurality of smart meters to a phase of the three phases. The multi-objective optimization algorithm minimizes: a sum of residuals of all pairs of phases of the three phases upon assigning all smart meters to phases of the three phases; and a sum of mean crest factors of the three phases upon assigning all smart meters to phases of the three phases. Further, upon assigning all smart meters to phases of the three phases, the sum of residuals and the sum of mean crest factors are non-dominated in a Pareto front.

In some embodiments the method comprises:

running a multi-objective optimization algorithm for assigning each smart meter of the plurality of smart meters to a phase of the three phases;
the multi-objective optimization algorithm minimizes:

a sum of residuals of all pairs of phases of the three phases upon assigning all smart meters to phases of the three phases; and
a sum of mean crest factors of the three phases upon assigning all smart meters to phases of the three phases; and

upon assigning all smart meters to phases of the three phases, the sum of residuals and the sum of mean crest factors are non-dominated in a Pareto front.

The smart meters are assigned so as to reduce the sum of residuals of all pairs of phases of the three phases and the sum of mean crest factors of the three phases such that a trade-off may be provided with respect to balancing the phases of the distribution feeder and improving the operation of each phase. Accordingly, the optimization algorithm provides one or more non-dominated solutions, namely one or more sets of assignations of smart meters to phases, for which attempting to improve one of the sum of residuals or the sum of mean crest factors would worsen the other one of the sums.

Different multi-objective optimization algorithms known in the state of the art may be used without departing from the scope of the present disclosure, for example Non-dominated Sorting Genetic Algorithm-II (NSGA-II), Non-dominated Sorting Harmony Search II (NSHS-II), etc.

The method provides a list with the assignations of smart meters to phases of the distribution feeder. For example, but without limitation, the method provides a document with said list, a digital file with said list for inspection by an operator, or a digital file with said list for a device that automatically makes/switches electrical connections between smart meters and phases based on the digital file, etc.

In some embodiments, the method further comprises, for each smart meter of the plurality of smart meters, obtaining the electrical load pattern associated therewith.

In some embodiments, the method further comprises connecting each smart meter of the plurality of smart meters to the phase assigned.

Similar advantages as those described for the first aspect of the invention may also be applicable to the second aspect of the invention.

A second aspect of the invention relates to a device for assigning a plurality of smart meters to phases of a distribution feeder comprising three phases, each smart meter having an electrical load pattern associated therewith, the device being defined in claim 10. At least one processor is configured to digitally assign, for each smart meter of the plurality of smart meters, the smart meter to one phase of the three phases that minimizes one of:

> a sum of residuals of all pairs of phases of the three phases resulting from assigning the electrical load pattern of the smart meter to the one phase; and
> a sum of mean crest factors of the three phases resulting from assigning the electrical load pattern of the smart meter to the one phase.

Owing to the at least one processor, the device may provide assignations in which, at each iteration, either the sum of the resulting residuals of all pairs of phases of the three phases or the sum of the resulting mean crest factors of the three phases is minimized.

The device makes possible to provide an assignation of smart meters either within the premises of the distribution feeder or remote from the distribution feeder.

The device provides a list with the assignations of smart meters to phases of the distribution feeder. For example, but without limitation, the method provides a document with said list (e.g. with a printer), a digital file with said list for inspection by an operator, or a digital file with said list for a device that automatically makes/switches electrical connections between smart meters and phases based on the digital file, etc.

The at least one processor is further configured to digitally select, for each smart meter of the plurality of smart meters and prior to assigning the smart meter to the one phase of the three phases, the smart meter of the plurality of smart meters that minimizes one of:

> a Euclidean distance between the electrical load pattern of the smart meter and a residual of a first pair of phases of the three phases with respect to any other Euclidean distance between an electrical load pattern of any unassigned smart meter of the plurality of smart meters and a residual of any pair of phases of the three phases, the first pair of phases comprising the one phase; and
> a sum of the mean crest factors of the three phases resulting from assigning the electrical load pattern of the smart meter to the one phase with respect to any other sum of the mean crest factors of the three phases resulting from assigning the electrical load pattern of any unassigned smart meter of the plurality of smart meters to any phase of the three phases.

Further, the digital assignation of the smart meter to the one phase of the three phases minimizes:

> the sum of residuals of all pairs of phases of the three phases if the smart meter has been digitally selected such that the Euclidean distance is minimized; or
> the sum of mean crest factors of the three phases if the smart meter has been digitally selected such that the sum of the resulting mean crest factors is minimized.

In some preferred embodiments, the at least one processor is configured to, for each smart meter of the plurality of smart meters, :

> digitally select the smart meter of the plurality of smart meters that minimizes the Euclidean distance between the electrical load pattern of the smart meter and the residual of the first pair of phases of the three phases with respect to any other Euclidean distance between the electrical load pattern of any unassigned smart meter of the plurality of smart meters and a residual of any pair of phases of the three phases; and
> digitally assign the selected smart meter to the one phase of the three phases that minimizes the sum of the resulting residuals of all pairs of phases of the three phases.

In some other preferred embodiments, the at least one processor is configured to, for each smart meter of the plurality of smart meters, :

digitally select the smart meter of the plurality of smart meters that minimizes the sum of the mean crest factors of the three phases with respect to any other sum of mean crest factors of the three phases that would result from assigning any unassigned smart meter of the plurality of smart meters to any phase of the three phases; and

digitally assign the selected smart meter to the one phase of the three phases that minimizes the sum of the resulting mean crest factors of the three phases.

The at least one processor may be configured to run a greedy algorithm that carries out a greedy methodology, as described in the present disclosure, for digitally assigning each unassigned smart meter to one phase of the three phases (so as to minimize the sum of residuals of all pairs of phases of the three phases or the sum of mean crest factors of the three phases), and/or digitally selecting the unassigned smart meter of the plurality of smart meters (so as to minimize the Euclidean distance between the electrical load pattern of the unassigned smart meter and the residual of the first pair of phases of the three phases or the sum of the resulting mean crest factors of the three phases).

In some embodiments, the device further comprises communications means for transmission and reception of data.

The communications means may be configured to transmit the assignation of smart meters to phases of the distribution feeder to another device, such as: a computing device of an operator so that the operator may electrically connect the smart meters to the phases, a connection switching device that makes the electrical connections between the smart meters and the phases, etc.

The communications means may be configured to use at least one of Ethernet, cellular networks such as UMTS or LTE, and PLC (i.e. power line communications).

Further, the communications means may also be configured to receive, from a second device, the electrical load pattern of some or all smart meters of the plurality of smart meters. In some cases, the second device from which the electrical load pattern is received is one of the smart meters, whereas in some other cases the second device is a device communicatively coupled to one or more smart meters.

Similar advantages as those described for the first aspect of the invention may also be applicable to the second aspect of the invention.

A third aspect of the invention relates to a device adapted for carrying out a method according to the first aspect of the invention.

A fourth aspect of the invention relates to a device for connecting a plurality of smart meters to phases of a distribution feeder, the device comprising:

a first module configured to connect each smart meter of the plurality of smart meters to a phase of the distribution feeder, and further configured to switch electrical connections thereof; and

a second module configured to receive data from another device.

The first module comprises an electrical network configured to make and switch electrical connections of the smart meters to phases of the distribution feeder. The electrical network may comprise electromechanical relays or solid-state relays, using for example MOSFET technology, that are operated so as to connect and/or disconnect a smart meter to a phase of the distribution feeder, and to switch an existing connection thereof. The electrical network may further comprise components for electrically separating the section featuring high power from the control and switching section; such components may be, for example, optocouplers.

On the other hand, the first module also comprises a computing device such as a microcontroller for controlling the electrical network based on a given assignation of smart meters to phases of the distribution feeder. Particularly, the microcontroller may modify the state of the relays so as to make or vary (i.e. switch) the electrical connections.

The device may receive, through the second module, data regarding the assignation of smart meters to phases of the distribution feeder. The computing device adjusts the electrical network (the components thereof) according to the assignation received.

As the device may be remotely controlled and operated, the operators do not have to go to the location where the distribution feeder is so as to effect the assignation of smart meters. Moreover, in addition to a reduction in the costs incurred in connecting the smart meters to the distribution feeder, the connection of smart meters is less prone to errors since human intervention is limited to transmit to the device the assignation of smart meters to the phases of the distribution feeder; the electrical connections are actually made and/or switched by the device.

The device enables dynamic connections of smart meters to phases of the distribution feeder; when the electrical load patterns associated with the smart meters vary due to, for example, different seasonality conditions, the assignation of smart meters may be modified. In this case, the electrical load patterns preferably comprise a time-series of discrete values with a time discretization selected with shorter period of time so that only one seasonality (e.g. one month, two months, etc.) is taken into account thereby optimizing the assignation of smart meters according to the selected period of time. The device receives the modified assignation of smart meters and effects it dynamically by controlling the electrical network.

In some embodiments, the second module is further configured to transmit data to another device.

The second module may preferably transmit, to a control center (for example to a device thereof such as the device according to the third or the fourth aspects of the invention), data regarding the topology of the distribution feeder. Further, the same module may transmit data, to the control center, regarding the smart meters, preferably the electrical load patterns obtained from the smart meters.

A fifth aspect of the invention relates to a system for assigning a plurality of smart meters to phases of a distribution feeder comprising three phases, each smart meter having an electrical load pattern associated therewith, the system comprising:

a first device according to the second or third aspects of the invention; and
a second device according to the fourth aspect of the invention.

The first device performs the assignation of the smart meters to the phases of the distribution feeder and transmits said assignation to the second device. The second device makes or switches the electrical connections between the smart meters and the phases according to the assignation received.

Similar advantages as those described for the first, second, third, and/or fourth aspects of the invention may also be applicable to the fifth aspect of the invention.

## BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:

Figure 1 shows a plurality of electricity customers with smart meters to be assigned to one of three phases of a distribution feeder.
Figures 2-4 diagrammatically show methods in accordance with embodiments of the invention.
Figure 5 diagrammatically shows how a residual of a pair of phases and its scalar are computed, and also how crest factors of phases and their mean are computed.
Figures 6A-6D show how crest factors may be minimized upon assignation of smart meters to phases of a distribution feeder.
Figure 7 shows non-dominated solutions in a Pareto front resulting from assigning smart meters with a method in accordance with an embodiment of the invention.
Figure 8 diagrammatically shows a device for connecting smart meters to a distribution feeder in accordance with an embodiment of the invention.

## DESCRIPTION OF WAYS OF CARRYING OUT THE INVENTION

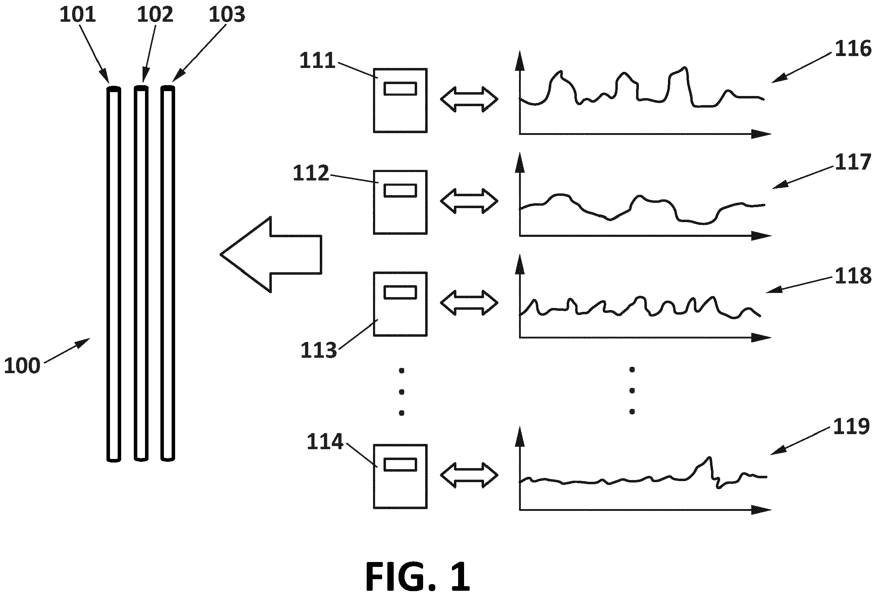

Figure 1 shows a plurality of electricity customers 111-114 with smart meters (not illustrated) that have to be assigned to one of three phases 101-103 of a distribution feeder 100.

The distribution feeder 100 comprises three phases 101-103 (these are sometimes referred to as: phases R, S and T; phases A, B and C; or phases 1, 2 and 3, for example) for delivering electricity to a plurality of customers 111-114, each of which has an electrical load pattern 116-119 associated therewith; in some embodiments, the distribution feeder 100 also comprises a neutral. Each electrical load pattern 116-119 indicates the power that has been consumed with a time discretization (periods of e.g. fifteen minutes, thirty minutes, one hour, etc.) over a time horizon (e.g. one day, one week, one month, several months, one year, etc.). By way of example, an electrical load pattern indicates the power consumed in one month with a granularity of thirty minutes, thereby providing an array with 1440 power consumption values (forty-eight values per day over thirty days). The electrical load patterns 116-119 are provided, for example, by smart meters that connect each customer 111-114 to one of the three phases 101-103 and meter the power consumption thereof.

In the methods, devices and systems of the present disclosure, the values of the electrical load patterns 116-119 indicate past power consumption of the customers 111-114. Depending on the period of time metered, similar power consumption patterns will occur according to the statistical model that is extrapolated from the electrical load patterns 116-119. As the electrical load patterns 116-119 are updated over time, the power consumption of each customer 111-114 reflects any variations occurring in the electrical load patterns 116-119 (e.g. new appliances being used, formed appliances not being used anymore, increase or reduction in the use of air conditioners, etc.) and thus the power that is consumed in the future tends to be similar to the electrical load patterns 116-119. As different power consumption patterns exist for different months or seasons of the year, the electrical load patterns 116-119 may preferably indicate how these patterns are over a period of one year; for example, but without limitation, each electrical load pattern 116-119 indicates the power consumption over 365 days with a granularity of one hour.

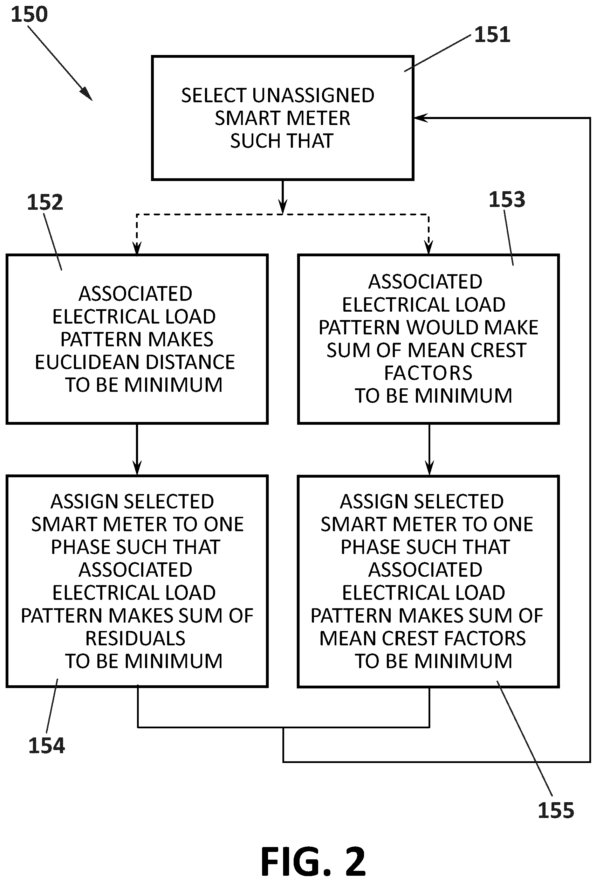

Figure 2 diagrammatically shows a method 150, in accordance with an embodiment of the invention, for assigning a plurality of smart meters to phases of a three-phase distribution feeder.

The method 150 comprises a step of selecting 151 an unassigned smart meter of the plurality of smart meters such that one of the two following conditions 152, 153 is met:

- First selection condition 152: The electrical load pattern associated with the selected unassigned smart meter provides an Euclidean distance between said electrical load pattern and a residual of one pair of phases of the three phases of the distribution feeder that has a lowest scalar value with respect to a scalar value of any other Euclidean distance (particularly, Euclidean distances of said electrical load pattern and a residual of any other pair of phases of the three phases, and Euclidean distances of the electrical load pattern of any other unassigned smart meter and a residual of any pair of phases of the three phases).
- Second selection condition 153: The electrical load pattern associated with the selected unassigned smart meter would provide a sum of mean crest factors of the three phases of the distribution feeder to have a lowest value, if it were assigned to one phase thereof, with respect to a value of any other sum of mean crest factors (particularly, sums of mean crest factors that would result from assigning said electrical load pattern to another phase of the three phases, and sums of mean crest factors of the electrical load pattern of any other unassigned smart meter that would result from assigning the electrical load pattern of the any other unassigned smart meter to a phase of the three phases).

The Euclidean distance is a series of discrete values or an array that is computed between two series of discrete values or arrays as:

$$d_{a-b,i} = \sqrt{(a_i - b_i)^2}$$

where $d_{a-b,i}$ is the i-th value of the Euclidean distance between first and second arrays a and b, $a_i$ is the i-th value of the first array (e.g. the electrical load pattern of the unassigned smart meter) and $b_i$ is the i-th value of the second array (e.g. the residual of a pair of phases). The residual of a pair of phases is a series of discrete values or an array that is computed as the Euclidean distance between a first series of discrete values or array (the aggregated electrical load pattern of a first phase of the pair of phases, e.g. phase R), and a second series of discrete values or array (the aggregated electrical load pattern of a second phase of the pair of phases, e.g. phase S):

$$R_{R-S,i} = \sqrt{\left(EL_{R,i} - EL_{S,i}\right)^2}$$

where $R_{R-S,i}$ is the i-th value of the residual between phases R and S, and $EL_{R,i}$ and $EL_{S,i}$ are the i-th values of the aggregated electrical load patterns of the R and S phases, respectively.

The scalar value of the Euclidean distance, $d_{scalar}$, is computed as:

$$d_{scalar} = \sqrt{\sum_{i=1}^{L} d_i^2}$$

where $d_i$ is the i-th value of the array of the Euclidean distance, and L is the number of values of the array of the Euclidean distance. The scalar value of the residual is computed in the same way as the scalar value of the Euclidean distance since the residual is also a Euclidean distance.

The sum of mean crest factors, SCF, is a scalar value that is computed as the sum of the mean crest factor of each phase of the three phases:

$$SCF = mean(CF_R) + mean(CF_S) + mean(CF_T)$$

where $CF_R$, $CF_S$ and $CF_T$ are arrays of crest factors of the phase R, S and T, respectively. The mean function is preferably an arithmetic mean; in preferred embodiments, each array of crest factors comprises 365 values, each of which corresponds to the crest factor of a phase corresponding to a day of the year. Each crest factor of the array of crest factors of a phase is computed as:

$$CF_{X,i} = \frac{\left|X_{T_i}\right|_{peak}}{X_{T_i,rms}}$$

where $CF_{X,i}$ is the i-th value of the array of crest factors of a phase X, $|X_{Ti}|_{peak}$ is the peak value of the aggregated electrical load pattern of the phase X over a period of time $T_i$ (e.g. a period of time of 24 hours corresponding to the i-th day), and $X_{Ti,rms}$ is the root mean square value of the aggregated electrical load pattern of the phase X over the same period of time $T_i$.

The method 150 further comprises a first step of assigning 154 the selected unassigned smart meter, upon selection thereof 151 according to the first selection condition 152, to one phase of the distribution feeder such that the associated electrical load pattern makes the sum of residuals of all pairs of phases of the three phases to have a lowest value with respect to a value of any other sum of residuals of all pairs of phases of the three phases (particularly, sums of residuals of all pairs of phases of the three phases that would result from assigning the electrical load pattern of the selected unassigned smart meter to another phase different from the one phase). The sum of residuals, SR, is computed as:

$$SR = \left|R_{R-S|scalar}\right| + \left|R_{S-T|scalar}\right| + \left|R_{R-T|scalar}\right|$$

where $R_{R-s|scalar}$, $R_{S-T|scalar}$ and $R_{R-T|scalar}$ are the scalar values of the residuals between the pair of phases R and S, S and T, and R and T, respectively.

The method 150 further comprises a second step of assigning 155 the selected unassigned smart meter, upon selection thereof 151 according to the second selection condition 153, to one phase of the distribution feeder such that the associated electrical load pattern makes the sum of mean crest factors of the three phases to have a lowest value with respect to a value of any other sum of mean crest factors of the three phases (particularly, sums of mean crest factors of the three phases that would result from assigning the electrical load pattern of the selected unassigned smart meter to another phase different from the one phase).

Once the selected unassigned smart meter has been assigned to one phase with the first or second steps of assigning 154, 155, remaining unassigned smart meters are selected 151 and assigned 154, 155 to phases of the distribution feeder in the same way, thus the method is iterated as many times as unassigned smart meters are. Further, each new smart meter that is to be assigned takes into account smart meters previously assigned to the phases of the distribution feeder, and thus the residuals and crest factors are computed again with each new assignation of a smart meter.

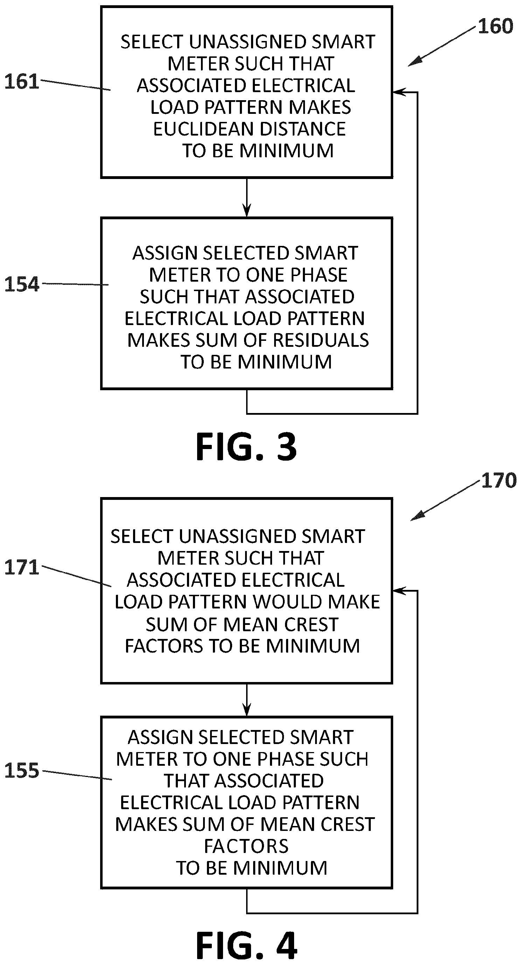

Figure 3 diagrammatically shows a method 160, in accordance with an embodiment of the invention, for assigning a plurality of smart meters to phases of a distribution feeder comprising three phases.

The method 160 comprises a step of selecting 161 an unassigned smart meter of the plurality of smart meters such that the associated electrical load pattern makes the Euclidean distance between said electrical load pattern and the residual of one pair of phases of the three phases of the distribution feeder to have a lowest scalar value with respect to the scalar value of any other Euclidean distance, as in the first selection condition 152 of the method 150 of Figure 2. The step of selecting 161 the unassigned smart meter can be carried out by computing, at each iteration, the Euclidean distances between the electrical load pattern of each unassigned smart meter and the residuals of each pair of phases of the three phases and comparing the same. The smart meter providing the Euclidean distance with a lowest scalar value is selected 161.

The method 160 further comprises the first step of assigning 154 of the method 150 of Figure 2 so as to assign the unassigned smart meter selected in the step of selecting 161.

Upon assigning 154 the smart meter to one of the phases of the distribution feeder, the same steps 161, 154 of the method 160 are repeated to select and assign any smart meters of the plurality of smart meters that remain to be assigned to a phase of the distribution feeder.

Figure 4 diagrammatically shows a method 170, in accordance with an embodiment of the invention, for assigning a plurality of smart meters to phases of a distribution feeder comprising three phases.

The method 170 comprises a step of selecting 171 an unassigned smart meter of the plurality of smart meters such that the associated electrical load pattern would make the sum of mean crest factors of the three phases of the distribution feeder to have a lowest value, if it were assigned to one phase thereof, with respect to the value of any other sum of mean crest factors, as in the second selection condition 153 of the method 150 of Figure 2.

The step of selecting 171 the unassigned smart meter can be carried out by testing at each iteration all possible assignations of unassigned smart meters to each phase of the distribution feeder, computing the sum of resulting mean crest factors and comparing the same. The smart meter providing the sum of resulting mean crest factor with a lowest value is selected 171.

The method 170 further comprises the second step of assigning 155 of the method 150 of Figure 2 so as to assign the unassigned smart meter selected in the step of selecting 171.

Upon assigning 155 the smart meter to one of the phases of the distribution feeder, the same steps 171, 155 of the method 170 are repeated to select and assign any smart meters of the plurality of smart meters that remain to be assigned to a phase of the distribution feeder.

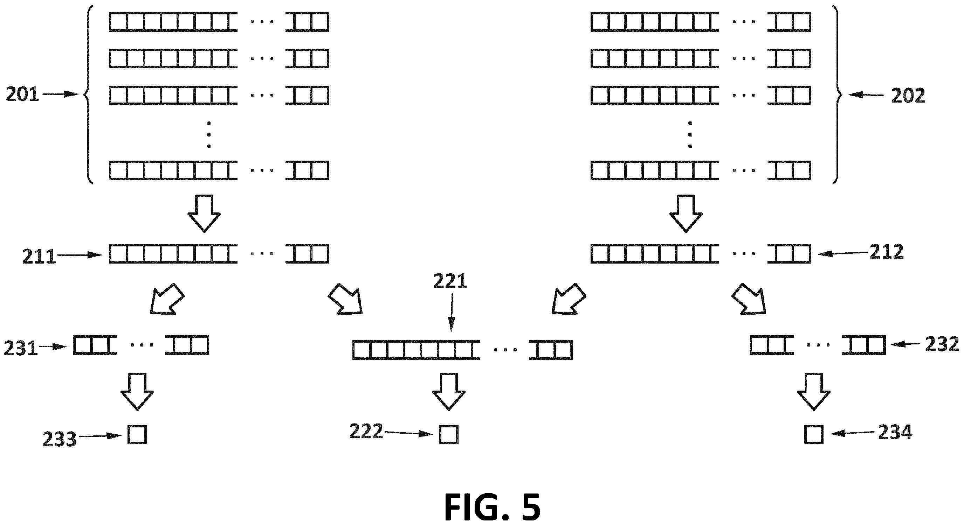

Figure 5 diagrammatically shows how a residual 221 of a pair of phases and its scalar 222 are computed, and also how crest factors 231, 232 of phases and their mean 233, 234 are computed.

In Figure 5 there is shown a first phase of a three-phase distribution feeder having assigned and/or connected thereto a first plurality of smart meters, each having a first electrical load pattern 201 associated therewith. There is also shown a second phase of the three-phase distribution feeder having assigned and/or connected thereto a second plurality of smart meters, each having a second electrical load pattern 202 associated therewith. Each of the first and second electrical load patterns 201, 202 is represented as an array with values corresponding to the power consumed, over a period of time, with a specified time discretization (e.g. 365 days with a time granularity of 1 hour, therefore the number of values of each array is 8760).

A first aggregated electrical load pattern 211 of the first phase is computed as the sum of each first electrical load pattern 201 (arrays), column by column. A second aggregated electrical load pattern 212 of the second phase is computed in the same fashion as the first aggregated electrical load pattern 211 but with each second electrical load pattern 202. Each of the first and second aggregated load patterns 211, 212 is an array with same time discretization and period of time as the arrays forming it.

A residual 221 between the first and second phases is computed as the Euclidean distance between the first aggregated electrical load pattern 211 and the second aggregated electrical load pattern 212. The residual 221 is provided as a series of discrete values and is indicative of the electrical load pattern difference between the first and second phases. The residual 221 in scalar 222 form is computed as:

$$R_{R-S|scalar} = \sqrt{\sum_{i=1}^{L} R_{R-S,i}^2}$$

where $R_{R-S,i}$ is the i-th value of the array of the residual 221 (between phases R and S, that may be for instance the first and second phases of the distribution feeder of Figure 5), and L is the number of values of the array of the residual 221.

Further, a first set of crest factors 231 of the first phase is computed from the first aggregated electrical load pattern 211, and a second set of crest factors 232 of the second phase is computed from the second aggregated electrical load pattern 212. Each value of the first and second sets of crest factors 231, 232 corresponds to a crest factor computed over a period of time T. First and second mean crest factors 233, 234 of the first and second phases, respectively, are computed as the arithmetic mean of each of the first and second sets of crest factors 231, 232.

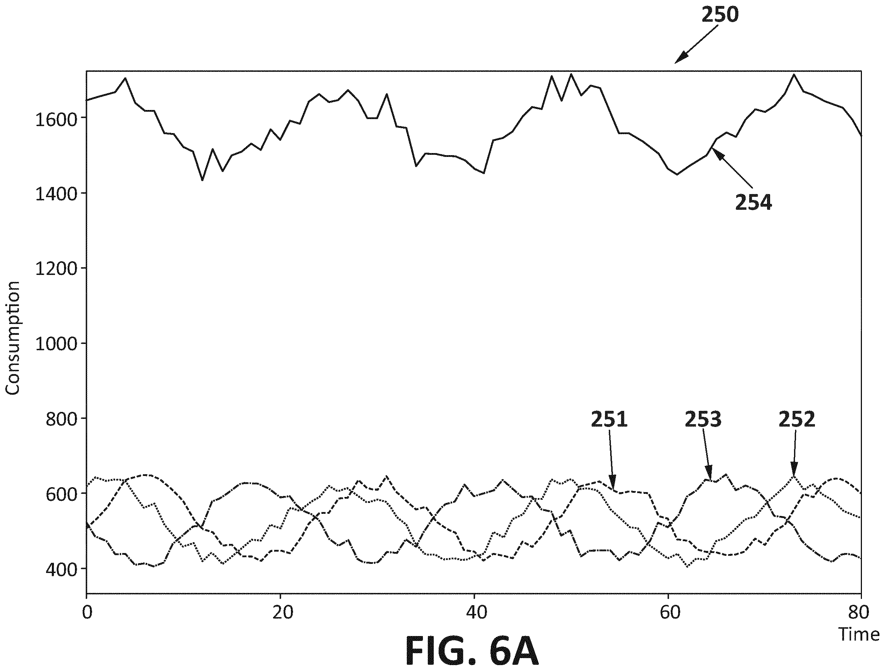

Figure 6A shows a first graph 250 with a first aggregated electrical load patterns 251 (illustrated with a dashed line), a second aggregated electrical load pattern 252 (illustrated with a dotted line), and a third aggregated electrical load pattern 253 (illustrated with a dot-dashed line) of first, second and third phases of a three-phase distribution feeder (referred to in the legend thereof as phases R, S and T), respectively. The first graph 250 also includes a fourth aggregated electrical load pattern 254 (illustrated with a solid line) corresponding to the distribution feeder, that is, the fourth aggregated electrical load pattern 254 is the sum of the aggregated electrical load patterns 251-253 of the phases of the distribution feeder. By way of example, several periods of time corresponding to consecutive periods of 24 hours may be provided. A crest factor may be computed for each of the first, second and third phases for each of the 24-hour periods of time; a mean crest factor of each phase may be computed as the arithmetic mean of the crest factors of each phase for the 24-hour periods of time.

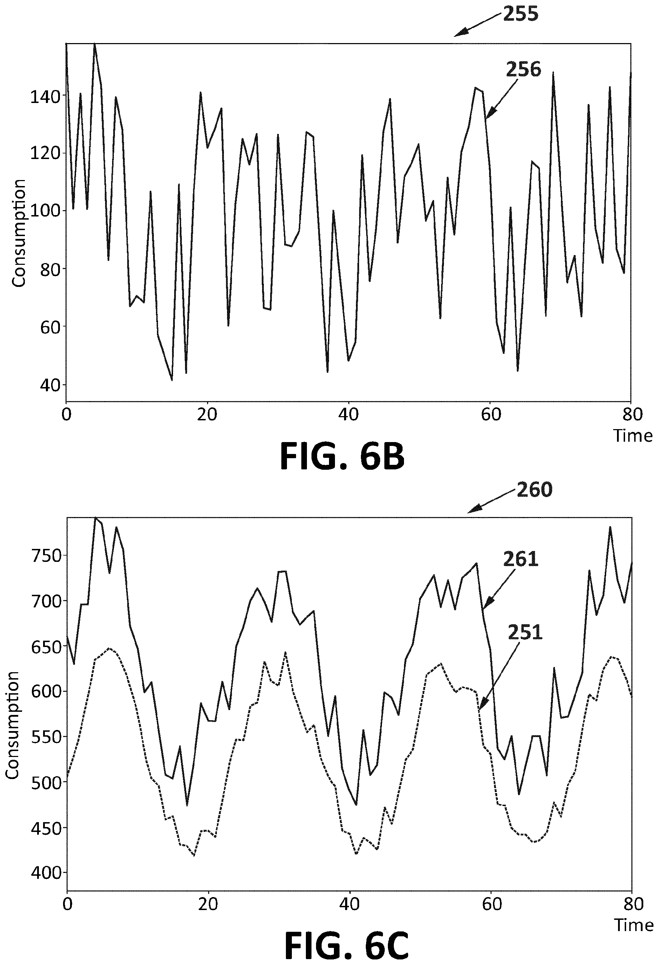

Figure 6B shows a second graph 255 with an electrical load pattern 256 associated with a selected unassigned smart meter. The same time horizon of the first graph 250 is also provided. The selected unassigned smart meter of the electrical load pattern 256 has to be assigned to one of the phases of the first graph 250 such that the sum of resulting mean crest factors is minimized.

Figure 6C shows a third graph 260 with the first aggregated electrical load pattern 251 (phase R), and also with a fifth aggregated electrical load pattern 261 that would result from the assignation of the selected unassigned smart meter of Figure 6B to the first phase of the distribution feeder (phase R), hence the first phase would be subject to a change in its aggregated electrical load pattern.

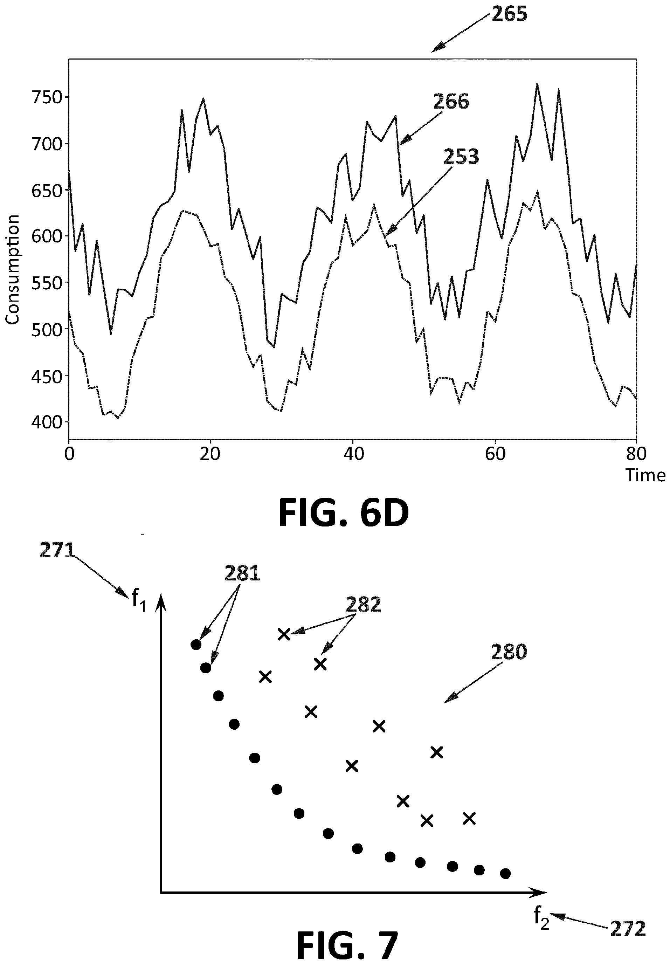

Figure 6D shows a fourth graph 265 with the third aggregated electrical load pattern 253 (phase T), and also with a sixth aggregated electrical load pattern 266 that would result from the assignation of the selected unassigned smart meter of Figure 6B to the third phase of the distribution feeder (phase T), hence the third phase would be subject to a change in its aggregated electrical load pattern.

A graph similar to the third and fourth graphs 260, 265 could be provided with regards to the second phase of the distribution feeder (phase S) in which the associated aggregated electrical load pattern can be represented if the electrical load pattern of Figure 6B were added to the second phase.

The electrical load pattern 256 partially compensates the peaks and valleys of the third aggregated electrical load pattern 253 so that the sixth aggregated electrical load pattern 266 features a mean crest factor smaller than the mean crest factor of the third aggregated electrical load pattern 253, whereas the electrical load pattern 256 does not compensate the first or the second aggregated electrical load patterns 251, 252 as much as the third aggregated electrical load pattern 253. Accordingly, by assigning the selected unassigned smart meter of Figure 6B to the third phase, the sum of the mean crest factors of the first, second and sixth aggregated electrical load patterns 251, 252, 266 has a lowest value than the value of the sums of the mean crest factors if the selected smart meter would have been assigned to either the first phase (Figure 6C) or the second phase.

It is readily apparent that even though the electrical load pattern 256 and the aggregated electrical load patterns 251-254, 261, 266 represented in Figures 6A-6D appear to be continuous, they are a plurality of discrete values based on the time discretization provided by the smart meters (for example as shown in Figure 5).

Figure 7 shows in a graph 280 non-dominated solutions 281 of sums of residuals of all pairs of phases of a three-phase distribution feeder and sums of mean crest factors of all phases of the same distribution feeder obtained with a method in accordance with an embodiment of the invention.

The method assigns a plurality of smart meters to phases of a distribution feeder and comprises carrying out a multi-objective optimization methodology by running a multi-objective optimization algorithm for assigning each unassigned smart meter to a phase of the distribution feeder.

The multi-objective optimization methodology provides the set of solutions contained in the non-dominated Pareto-front based on objective functions $f_1$ 271 and $f_2$ 272. The objective function $f_1$ 271 relates to minimizing a sum of residuals of all pairs of phases of the three phases upon assigning all unassigned smart meters to phases of the three phases. The objective function $f_2$ 272 relates to minimizing a sum of mean crest factors of the three phases upon assigning all unassigned smart meters to phases of the three phases.

In the example of Figure 7, the methodology provides several non-dominated solutions 281 (i.e. non-dominated Pareto front). These non-dominated solutions 281 correspond to the minimization of each of the two objective functions $f_1$ 271 and $f_2$ 272 such that attempting to further minimize any of the two objective functions $f_1$ 271 and $f_2$ 272 would worsen the other one of the two objective functions. In this sense, other solutions 282 are regarded as suboptimal since the non-dominated solutions 281 provided by the methodology further minimize the objective functions $f_1$ 271 and $f_2$ 272.

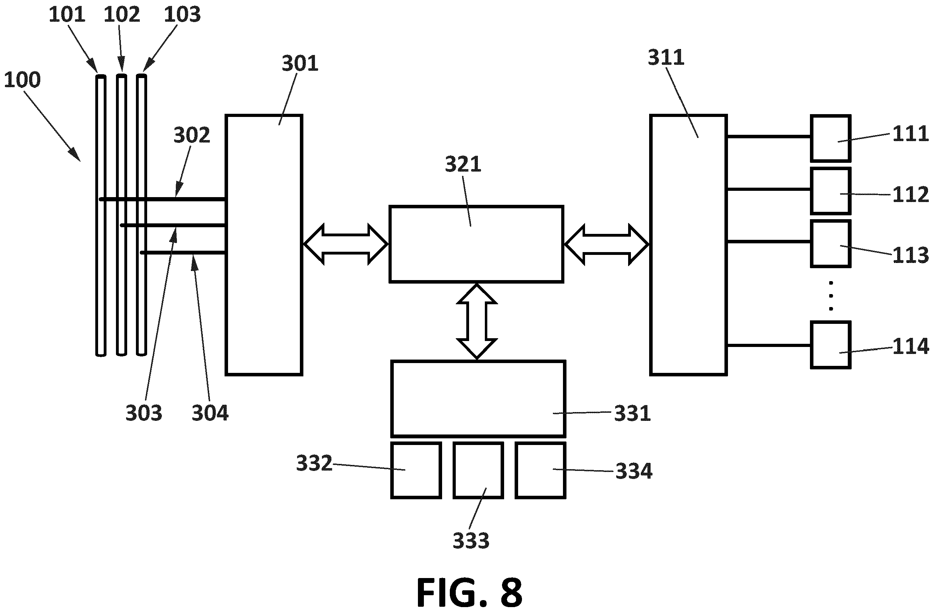

Figure 8 diagrammatically shows a device 300 for connecting smart meters 111-114 to a three-phase distribution feeder 100 in accordance with an embodiment of the invention.

The device 300 comprises a first module 321 configured to connect the plurality of smart meters 111-114 to phases 101-103 of the distribution feeder. The first module 321 is further configured to switch established electrical connections between any smart meter 111-114 and a phase 101-103 of the distribution feeder. Each smart meter 111-114 may correspond to a different single-phase customer.

The first module 321 comprises a microcontroller and an electrical network with a plurality of relays controllable with the microcontroller. The plurality of relays makes possible to establish electrical connections between any smart meter 111-114 and any of the three phases 101-103 so that the distribution feeder 100 may be configured according to different assignations of smart meters 111-114 to the phases 101-103 thereof.

The device 300 further comprises a second module 331 configured to transmit data to and receive data from other devices (that may be remote from the device 300, for instance in a control center) through at least one of power-line communications 332, cellular networks 333 and Ethernet 334. Through the second module 331 the device 300 may receive the assignation that needs to be applied to the smart meters 111-114 with respect to the distribution feeder 100, and which the first module 321 effects. Further, the device 300 sends, through the second module 331, the assignation the first module 321 effects so as to indicate such assignation, thereby enabling the devices communicatively coupled to the device 300 to determine whether any smart meter 111-114 has to be reassigned to a different phase.

In order to connect the smart meters 111-114 to the phases 101-103 of the distribution feeder 100, the device 300 also comprises a third module 301 with electrical connections 302-304 to each of the phases 101-103, and a fourth module 311 with electrical connections to each of the smart meters 111-114. The fourth module 311 obtains the electrical load patterns of each smart meter 111-114 so that the power consumption indicated therein may be transmitted to another device through the second module 331.

In some embodiments, the first module 321, the third module 301 and the fourth module 311 are provided as a single module.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the components, configuration, etc.), within the general scope of the invention as defined in the claims.

## Claims

1. A method (150, 160, 170) for assigning a plurality of smart meters (111-114) to phases (101-103) of a distribution feeder (100) comprising three phases (101-103), each smart meter (111-114) having an electrical load pattern (116-119, 256) associated therewith, the method comprising:

   for each smart meter of the plurality of smart meters (111-114), assigning (154, 155) the smart meter to one phase (101-103) of the three phases (101-103) that minimizes one of:

   a sum of residuals (222) of all pairs of phases of the three phases (101-103) resulting from assigning the electrical load pattern (116-119, 256) of the smart meter to the one phase (101-103), each residual of the sum of residuals (222) being a scalar value corresponding to a squared root mean value of a time-series of discrete values of a residual of the respective pair of phases; and
   a sum of mean crest factors (233, 234) of the three phases (101-103) resulting from assigning the electrical load pattern (116-119, 256) of the smart meter to the one phase (101-103), each mean crest factor of the sum of mean crest factors (233, 234) being a mean value of an array of crest factors of the respective phase where each value of the array is $CF_{X,i} = \dfrac{|X_{T_i}|_{peak}}{X_{T_i,rms}}$, where $CF_{X,i}$ is the i-th value of an array of crest factors of the respective phase, $|X_{Ti}|_{peak}$ is a peak value of an aggregated electrical load pattern of the respective phase over a period of time $T_i$, and $X_{Ti,rms}$ is a root mean square value of the aggregated electrical load pattern of the respective phase over the period of time $T_i$;

   **characterized in that:**

   for each smart meter of the plurality of smart meters (111-114) and prior to assigning (154, 155) the smart meter to the one phase (101-103) of the three phases (101-103), selecting (151) the smart meter of the plurality of smart meters (111-114) that minimizes one of:

   a Euclidean distance between the electrical load pattern (116-119, 256) of the smart meter and a residual (221) of a first pair of phases of the three phases (101-103) with respect to any other Euclidean distance between an electrical load pattern (116-119, 256) of any unassigned smart meter of the plurality of smart meters (111-114) and a residual (221) of any pair of phases of the three phases (101-103), the first pair of phases comprising the one phase (101-103), each residual (221) being the Euclidean distance between aggregated electrical load patterns (211, 212) of the respective pair of phases; and
   a sum of the mean crest factors (233, 234) of the three phases (101-103) resulting from assigning the electrical load pattern (116-119, 256) of the smart meter to the one phase (101-103) with respect to any other sum of the mean crest factors (233, 234) of the three phases (101-103) resulting from assigning the electrical load pattern (116-119, 256) of any unassigned smart meter of the plurality of smart meters (111-114) to any phase (101-103) of the three phases (101-103);

   wherein assigning (154, 155) the smart meter to the one phase (101-103) of the three phases (101-103) minimizes:

   the sum of residuals (222) of all pairs of phases of the three phases (101-103) if the smart meter has been selected (151) such that the Euclidean distance is minimized (152); or
   the sum of mean crest factors (233, 234) of the three phases (101-103) if the smart meter has been selected (151) such that the sum of the resulting mean crest factors (233, 234) is minimized (153).

2. The method (150, 160, 170) of claim 1, wherein selecting (151) the smart meter of the plurality of smart meters (111-114) and assigning (154, 155) the smart meter to the one phase (101-103) of the three phases (101-103) is carried out digitally with a greedy algorithm.

3. The method (160) of any of claims 1-2, wherein:

selecting (161) the smart meter of the plurality of smart meters (111-114) minimizes a Euclidean distance between the electrical load pattern (116-119, 256) of the smart meter and the residual (221) of the first pair of phases of the three phases (101-103) with respect to any other Euclidean distance between the electrical load pattern (116-119, 256) of any unassigned smart meter of the plurality of smart meters (111-114) and the residual (221) of any pair of phases of the three phases (101-103); and
assigning (154) the smart meter to the one phase (101-103) of the three phases (101-103) is carried out such that the sum of the resulting residuals (222) of all pairs of phases of the three phases (101-103) is minimized.

4. The method (170) of any of claims 1-2, wherein:

selecting (171) the smart meter of the plurality of smart meters (111-114) minimizes the sum of the resulting mean crest factors (233, 234) of the three phases (101-103) with respect to any other sum of mean crest factors (233, 234) of the three phases (101-103) that would result from assigning any unassigned smart meter of the plurality of smart meters (111-114) to any phase (101-103) of the three phases (101-103); and
assigning (155) the smart meter to the one phase (101-103) of the three phases (101-103) is carried out such that the sum of the resulting mean crest factors (233, 234) of the three phases (101-103) is minimized.

5. The method (150, 160, 170) of any of claims 1-3, further comprising:

for each pair of phases of the three phases (101-103) and for each smart meter (111-114) of the plurality of smart meters (111-114) assigned to one of the phases (101-103) thereof, computing the Euclidean distance between the electrical load pattern (116-119, 256) of the smart meter (111-114) and a residual (221) of the pair of phases; and
selecting the smart meter (111-114) of the electrical load pattern (116-119, 256) with the minimum Euclidean distance and assigning the smart meter (111-114) to the other phase (101-103) of the pair of phases if the resulting residual (222) of the pair of phases decreases.

6. The method (150, 160, 170) of any of claims 1-5, further comprising:
for each smart meter (111-114) of the plurality of smart meters (111-114), obtaining the electrical load pattern (116-119, 256) associated therewith.

7. The method (150, 160, 170) of claim 6, further comprising:
prior to start assigning (154, 155) unassigned smart meters of the plurality of smart meters (111-114) to phases (101-103) of the distribution feeder (100), disconnecting at least one smart meter (111-114) connected to a phase (101-103) of the distribution feeder (100) thereby providing at least one unassigned smart meter.

8. The method (150, 160, 170) of any of claims 1-7, further comprising connecting each smart meter (111-114) of the plurality of smart meters (111-114) to the phase (101-103) assigned.

9. The method of claim 1, wherein assigning (154, 155) the smart meter to the one phase (101-103) of the three phases (101-103) is carried out by running a multi-objective optimization algorithm for assigning each smart meter of the plurality of smart meters (111-114) to a phase (101-103) of the three phases (101-103), wherein the multi-objective optimization algorithm minimizes:

the sum of residuals (222) of all pairs of phases of the three phases (101-103) upon assigning all smart meters to phases (101-103) of the three phases (101-103); and
the sum of mean crest factors (233, 234) of the three phases (101-103) upon assigning all smart meters to phases (101-103) of the three phases (101-103); and
wherein upon assigning all smart meters to phases of the three phases the sum of residuals (222) and the sum of mean crest factors (233, 234) are non-dominated (281) in a Pareto front.

**10.** A device for assigning a plurality of smart meters (111-114) to phases (101-103) of a distribution feeder (100) comprising three phases (101-103), each smart meter (111-114) having an electrical load pattern (116-119, 256) associated therewith, the device comprising:

at least one processor configured to digitally assign, for each smart meter of the plurality of smart meters (111-114), the smart meter to one phase (101-103) of the three phases (101-103) that minimizes one of:

a sum of residuals (222) of all pairs of phases of the three phases (101-103) resulting from assigning the electrical load pattern (116-119, 256) of the smart meter to the one phase (101-103), each residual of the sum of residuals (222) being a scalar value corresponding to a squared root mean value of a time-series of discrete values of a residual of the respective pair of phases; and
a sum of mean crest factors (233, 234) of the three phases (101-103) resulting from assigning the electrical load pattern (116-119, 256) of the smart meter to the one phase (101-103), each mean crest factor of the sum of mean crest factors (233, 234) being a mean value of an array of crest factors of the respective phase where each value of the array is $CF_{X,i} = \dfrac{\left|X_{T_i}\right|_{peak}}{X_{T_i,rms}}$, where $CF_{X,i}$ is the i-th value of an array of crest factors of the respective phase, $\left|X_{T_i}\right|_{peak}$ is a peak value of an aggregated electrical load pattern of the respective phase over a period of time $T_i$, and $X_{T_i,rms}$ is a root mean square value of the aggregated electrical load pattern of the respective phase over the period of time $T_i$;

**characterized in that:**

the at least one processor is further configured to digitally select, for each smart meter of the plurality of smart meters (111-114) and prior to assigning the smart meter to the one phase (101-103) of the three phases (101-103), the smart meter of the plurality of smart meters (111-114) that minimizes one of:

a Euclidean distance between the electrical load pattern (116-119, 256) of the smart meter and a residual (221) of a first pair of phases of the three phases (101-103) with respect to any other Euclidean distance between an electrical load pattern (116-119, 256) of any unassigned smart meter of the plurality of smart meters (111-114) and a residual (221) of any pair of phases of the three phases (101-103), the first pair of phases comprising the one phase (101-103), each residual (221) being the Euclidean distance between aggregated electrical load patterns (211, 212) of the respective pair of phases; and
a sum of the mean crest factors (233, 234) of the three phases (101-103) resulting from assigning the electrical load pattern (116-119, 256) of the smart meter to the one phase (101-103) with respect to any other sum of the mean crest factors (233, 234) of the three phases (101-103) resulting from assigning the electrical load pattern (116-119, 256) of any unassigned smart meter of the plurality of smart meters (111-114) to any phase (101-103) of the three phases (101-103);

wherein the digital assignation of the smart meter to the one phase (101-103) of the three phases (101-103) minimizes:

the sum of residuals (222) of all pairs of phases of the three phases (101-103) if the smart meter has been digitally selected such that the Euclidean distance is minimized; or
the sum of mean crest factors (233, 234) of the three phases (101-103) if the smart meter has been digitally selected such that the sum of the resulting mean crest factors (233, 234) is minimized.

**11.** The device of claim 10, wherein the at least one processor is configured to, for each smart meter of the plurality of smart meters (111-114), :

digitally select the smart meter of the plurality of smart meters (111-114) that minimizes the Euclidean distance between the electrical load pattern (116-119, 256) of the smart meter and the residual (221) of the first pair of phases of the three phases (101-103) with respect to any other Euclidean distance between the electrical load pattern (116-119, 256) of any unassigned smart meter of the plurality of smart meters (111-114) and a residual (221) of any pair of phases of the three phases (101-103); and
digitally assign the smart meter to the one phase (101-103) of the three phases (101-103) that minimizes the sum of the resulting residuals (222) of all pairs of phases of the three phases (101-103).

**12.** The device of claim 10, wherein the at least one processor is configured to, for each smart meter of the plurality of smart meters (111-114),:

digitally select the smart meter of the plurality of smart meters (111-114) that minimizes the sum of the mean crest factors (233, 234) of the three phases (101-103) with respect to any other sum of mean crest factors (233, 234) of the three phases (101-103) that would result from assigning any unassigned smart meter of the plurality of smart meters (111-114) to any phase (101-103) of the three phases (101-103); and

digitally assign the smart meter to the one phase (101-103) of the three phases (101-103) that minimizes the sum of the resulting mean crest factors (233, 234) of the three phases (101-103).

**13.** A system for assigning a plurality of smart meters (111-114) to phases (101-103) of a distribution feeder (100) comprising three phases (101-103), each smart meter (111-114) having an electrical load pattern (116-119, 256) associated therewith, the system comprising:

a first device according to any of claims 10-12; and
a second device (300) comprising:

a first module (321) configured to electrically connect the plurality of smart meters (111-114) to phases (101-103) of the distribution feeder (100), and further configured to switch electrical connections thereof; and
a second module (331) configured to receive data from the first device.

**Patentansprüche**

**1.** Verfahren (150, 160, 170) zur Zuweisung mehrerer Smart Meter (intelligente Stromzähler) (111 - 114) an Phasen (101 - 103) einer Verteilungseinspeisung (100), die drei Phasen (101 - 103) aufweisen, wobei jeder Smart Meter (111 - 114) ein zugehöriges elektrisches Lastmuster (116 - 119, 256) hat, wobei das Verfahren aufweist:

für jeden Smart Meter der mehreren Smart Meter (111 - 114) Zuweisen (154, 155) des Smart Meters an eine Phase (101 - 103) der drei Phasen (101 - 103), die eines der folgenden minimiert:

eine Summe von Resten (222) aller Phasenpaare der drei Phasen (101 - 103), die sich aus der Zuweisung des elektrischen Lastmusters (116 - 119, 256) des Smart Meters an die eine Phase (101, 103) ergeben, wobei jeder Rest der Summe von Resten (222) ein Skalarwert ist, der einem quadratischen Mittelwert einer Zeitreihe diskreter Werte eines Rests des jeweiligen Phasenpaars entspricht; und
eine Summe mittlerer Scheitelfaktoren (233, 234) der drei Phasen (101 - 103), die sich aus der Zuweisung des elektrischen Lastmusters (116 - 119, 256) des Smart Meters an die eine Phase (101 - 103) ergibt, wobei jeder mittlere Scheitelfaktor der Summe mittlerer Scheitelfaktoren (233, 234) ein Mittelwert einer Matrix von Scheitelfaktoren der jeweiligen Phase ist, wobei jeder Wert der Matrix $CF_{X,i} = \dfrac{\left\| X_{T_i} \right\|_{Spitze}}{X_{T_i},rms}$ ist, wobei $CF_{X,i}$ der i-te Wert einer Matrix von Scheitelfaktoren der jeweiligen Phase ist, $\left\| X_{T_i} \right\|_{Spitze}$ ein Spitzenwert eines gesammelten elektrischen Lastmusters der jeweiligen Phase über eine Zeitspanne $T_i$ ist, und $X_{T_i,rms}$ ein quadratischer Mittelwert des gesammelten elektrischen Lastmusters der jeweiligen Phase über die Zeitspanne $T_i$ ist;

**dadurch gekennzeichnet, dass**:

für jeden Smart Meter der mehreren Smart Meter (111 - 114) und vor der Zuweisung (154, 155) des Smart Meters an die eine Phase (101 - 103) der drei Phasen (101 - 103) der Smart Meter der mehreren Smart Meter (111 - 114) ausgewählt wird, der eines der folgenden minimiert:

einen euklidischen Abstand zwischen dem elektrischen Lastmuster (116 - 119, 256) des Smart Meters und einem Rest (221) eines ersten Phasenpaars der drei Phasen (101 - 103) in Bezug auf jeden anderen euklidischen Abstand zwischen einem elektrischen Lastmuster (116 - 119, 256) jedes nicht zugewiesenen Smart Meters der mehreren Smart Meter (111 - 114) und einem Rest (221) jedes Phasenpaars der drei Phasen (101 - 103), wobei das erste Phasenpaar die eine Phase (101 - 103) aufweist, wobei jeder Rest (221) der euklidische Abstand zwischen gesammelten elektrischen Lastmustern (211, 212) des jeweiligen Phasenpaars ist; und

eine Summe der mittleren Scheitelfaktoren (233, 234) der drei Phasen (101 - 103), die sich aus der Zuweisung des elektrischen Lastmusters (116 - 119, 256) des Smart Meters an die eine Phase (101 - 103) ergibt, in Bezug auf jede andere Summe der mittleren Scheitelfaktoren (233, 234) der drei Phasen (101 - 103), die sich aus der Zuweisung des elektrischen Lastmusters (116 - 119, 256) jedes nicht zugewiesenen Smart Meters der mehreren Smart Meter (111 - 114) an jede Phase (101 - 103) der drei Phasen (101 - 103) ergibt;

wobei die Zuweisung (154, 155) des Smart Meters an die eine Phase (101 - 103) der drei Phasen (101 - 103) minimiert:

die Summe von Resten (222) aller Phasenpaare der drei Phasen (101 - 103), wenn das Smart Meter derart ausgewählt wurde (151), dass der euklidische Abstand minimiert wird (152); oder
die Summe mittlerer Scheitelfaktoren (233, 234) der drei Phasen (101 - 103), wenn der Smart Meter derart ausgewählt wurde (151), dass die Summe der sich ergebenden mittleren Scheitelfaktoren (233, 234) minimiert wird (153).

2. Verfahren (150, 160, 170) nach Anspruch 1, wobei das Auswählen (151) des Smart Meters der mehreren Smart Meter (111 - 114) und Zuweisen (154, 155) des Smart Meters an die eine Phase (101 - 103) der drei Phasen (101 - 103) mit einem Greedy-Algorithmus digital ausgeführt wird.

3. Verfahren (160) nach einem der Ansprüche 1 - 2, wobei:

das Auswählen (161) des Smart Meters der mehreren Smart Meter (111 - 114) einen euklidischen Abstand zwischen dem elektrischen Lastmuster (116 - 119, 256) des Smart Meters und dem Rest (221) des ersten Phasenpaars der drei Phasen (101 - 103) in Bezug auf jeden anderen euklidischen Abstand zwischen dem elektrischen Lastmuster (116 - 119, 256) jedes nicht zugewiesenen Smart Meters der mehreren Smart Meters (111 - 114) und dem Rest (221) jedes Phasenpaars der drei Phasen (101 - 103) minimiert; und
das Zuweisen (154) des Smart Meters an die eine Phase (101 - 103) der drei Phasen (101 - 103) derart ausgeführt wird, dass die Summe der sich ergebenden Reste (222) aller Phasenpaare der drei Phasen (101 - 103) minimiert wird.

4. Verfahren (170) nach einem der Ansprüche 1 - 2, wobei:

das Auswählen (171) des Smart Meters der mehreren Smart Meter (111 - 114) die Summe der sich ergebenden mittleren Scheitelfaktoren (233, 234) der drei Phasen (101 - 103) in Bezug auf jede andere Summe mittlerer Scheitelfaktoren (233, 234) der drei Phasen (101 - 103), die sich aus der Zuweisung jedes nicht zugewiesenen Smart Meters der mehreren Smart Meter (111 - 114) an jede Phase (101 - 103) der drei Phasen (101 - 103) ergeben würde, minimiert; und
das Zuweisen (155) des Smart Meters an die eine Phase (101 - 103) der drei Phasen (101 - 103) derart ausgeführt wird, dass die Summe der sich ergebenden mittleren Scheitelfaktoren (233, 234) der drei Phasen (101 - 103) minimiert wird.

5. Verfahren (150, 160, 170) nach einem der Ansprüche 1 - 3, das ferner aufweist:

für jedes Phasenpaar der drei Phasen (101 - 103) und für jeden Smart Meter (111 - 114) der mehreren Smart Meter (111 - 114), der einem seiner Phasen (101 - 103) zugewiesen ist, Berechnen des euklidischen Abstands zwischen dem elektrischen Lastmuster (116 - 119, 256) des Smart Meters (111 - 114) und einem Rest (221) des Phasenpaars; und
Auswählen des Smart Meters (111 - 114) des elektrischen Lastmusters (116 - 119, 256) mit dem minimalen euklidischen Abstand und Zuweisen des Smart Meters (111 - 114) an die andere Phase (101 - 103) des Phasenpaars, wenn der sich ergebende Rest (222) des Phasenpaars abnimmt.

6. Verfahren (150, 160, 170) nach einem der Ansprüche 1 - 5, das ferner aufweist:
für jeden Smart Meter (111 - 114) der mehreren Smart Meter (111 - 114) Gewinnen des zugehörigen elektrischen Lastmusters (116 - 119, 256).

7. Verfahren (150, 160, 170) nach Anspruch 6, das ferner aufweist:
vor dem Beginn der Zuweisung (154, 155) nicht zugewiesener Smart Meter der mehreren Smart Meter (111 - 114) an Phasen der Verteilungseinspeisung (100) Trennen wenigstens eines Smart Meters (111 - 114), der mit einer Phase (101 - 103) der Verteilungseinspeisung (100) verbunden ist, wodurch wenigstens ein nicht zugewiesener Smart Meter bereitgestellt wird.

8. Verfahren (150, 160, 170) nach einem der Ansprüche 1 - 7, das ferner jeden Smart Meter (111 - 114) der mehreren Smart Meter (111 - 114) mit der zugewiesenen Phase (101 - 103) verbindet.

9. Verfahren nach Anspruch 1, wobei die Zuweisung (154, 155) des Smart Meters an die eine Phase (101 - 103) der drei Phasen (101 - 103) ausgeführt wird, indem ein multikriterieller Optimierungsalgorithmus für die Zuweisung jedes Smart Meters der mehreren Smart Meter (111 - 114) an eine Phase (101 - 103) der drei Phasen (101 - 103) laufen gelassen wird, wobei der multikriterielle Optimierungsalgorithmus minimiert:

die Summe von Resten (222) aller Phasenpaare der drei Phasen (101 - 103) nach dem Zuweisen aller Smart Meter an Phasen (101 - 103) der drei Phasen (101 - 103); und
die Summe mittlerer Scheitelfaktoren (233, 234) der drei Phasen (101 - 103) nach der Zuweisung aller Smart Meter an Phasen (101 - 103) der drei Phasen (101 - 103); und
wobei nach der Zuweisung aller Smart Meter an Phasen der drei Phasen die Summe von Resten (222) und die Summe mittlerer Scheitelfaktoren (233, 234) in einer Pareto-Front nicht dominiert sind (281).

10. Vorrichtung zur Zuweisung mehrerer Smart Meter (111 - 114) an Phasen (101 - 103) einer Verteilungseinspeisung (100), die drei Phasen (101 - 103) aufweist, wobei jeder Smart Meter (111 - 114) ein zugehöriges elektrisches Lastmuster (116 - 119, 256) hat, wobei die Vorrichtung aufweist:

wenigstens einen Prozessor, der konfiguriert ist, um für jeden Smart Meter der mehreren Smart Meter (111 - 114) den Smart Meter an eine Phase (101 - 103) der drei Phasen (101 - 103) digital zuzuweisen, die eines der folgenden minimiert:

eine Summe von Resten (222) aller Phasenpaare der drei Phasen (101 - 103), die sich aus der Zuweisung des elektrischen Lastmusters (116 - 119, 256) des Smart Meters an die eine Phase (101, 103) ergeben, wobei jeder Rest der Summe von Resten (222) ein Skalarwert ist, der einem quadratischen Mittelwert einer Zeitreihe diskreter Werte eines Rests des jeweiligen Phasenpaars entspricht; und
eine Summe mittlerer Scheitelfaktoren (233, 234) der drei Phasen (101 - 103), die sich aus der Zuweisung des elektrischen Lastmusters (116 - 119, 256) des Smart Meters an die eine Phase (101 - 103) ergibt, wobei jeder mittlere Scheitelfaktor der Summe mittlerer Scheitelfaktoren (233, 234) ein Mittelwert einer Matrix von Scheitelfaktoren der jeweiligen Phase ist, wobei jeder Wert der Matrix $CF_{X,i} = \dfrac{\left|X_{T_i}\right|_{Spitze}}{X_{T_i},rms}$ ist, wobei $CF_{X,i}$ der i-te Wert einer Matrix von Scheitelfaktoren der jeweiligen Phase ist, $\left|X_{T_i}\right|_{Spitze}$ ein Spitzenwert eines gesammelten elektrischen Lastmusters der jeweiligen Phase über eine Zeitspanne $T_i$ ist, und $X_{T_i,rms}$ ein quadratischer Mittelwert des gesammelten elektrischen Lastmusters der jeweiligen Phase über die Zeitspanne $T_i$ ist;

**dadurch gekennzeichnet, dass**:

der wenigstens eine Prozessor ferner konfiguriert ist, um für jeden Smart Meter der mehreren Smart Meter (111 - 114) und vor der Zuweisung des Smart Meters an die eine Phase (101 - 103) der drei Phasen (101 - 103) den Smart Meter der mehreren Smart Meter (111 - 114) auszuwählen, der eines der folgenden minimiert:

einen euklidischen Abstand zwischen dem elektrischen Lastmuster (116 - 119, 256) des Smart Meters und einem Rest (221) eines ersten Phasenpaars der drei Phasen (101 - 103) in Bezug auf jeden anderen euklidischen Abstand zwischen einem elektrischen Lastmuster (116 - 119, 256) jedes nicht zugewiesenen Smart Meters der mehreren Smart Meter (111 - 114) und einem Rest (221) jedes Phasenpaars der drei Phasen (101 - 103), wobei das erste Phasenpaar die eine Phase (101 - 103) aufweist, wobei jeder Rest (221) der euklidische Abstand zwischen gesammelten elektrischen Lastmustern (211, 212) des jeweiligen Phasenpaars ist; und

eine Summe der mittleren Scheitelfaktoren (233, 234) der drei Phasen (101 - 103), die sich aus der Zuweisung des elektrischen Lastmusters (116 - 119, 256) des Smart Meters an die eine Phase (101 - 103) ergibt, in Bezug auf jede andere Summe der mittleren Scheitelfaktoren (233, 234) der drei Phasen (101 - 103), die sich aus der Zuweisung des elektrischen Lastmusters (116 - 119, 256) jedes nicht zugewiesenen Smart Meters der mehreren Smart Meter (111 - 114) an jede Phase (101 - 103) der drei Phasen (101 - 103) ergibt;

wobei die digitale Zuweisung des Smart Meters an die eine Phase (101 - 103) der drei Phasen (101 - 103) minimiert:

die Summe von Resten (222) aller Phasenpaare der drei Phasen (101 - 103), wenn das Smart Meter derart digital ausgewählt wurde, dass der euklidische Abstand minimiert wird; oder
die Summe mittlerer Scheitelfaktoren (233, 234) der drei Phasen (101 - 103), wenn der Smart Meter derart digital ausgewählt wurde (151), dass die Summe der sich ergebenden mittleren Scheitelfaktoren (233, 234) minimiert wird.

11. Vorrichtung nach Anspruch 10, wobei der wenigstens eine Prozessor konfiguriert ist, um für jeden Smart Meter der mehreren Smart Meter (111 - 114):

den Smart Meter der mehreren Smart Meter (111 - 114) digital auszuwählen, der den euklidischen Abstand zwischen dem elektrischen Lastmuster (116 - 119, 256) des Smart Meters und dem Rest (221) des ersten Phasenpaars der drei Phasen (101 - 103) in Bezug auf jeden anderen euklidischen Abstand zwischen dem elektrischen Lastmuster (116 - 119, 256) jedes nicht zugewiesenen Smart Meters der mehreren Smart Meters (111 - 114) und einem Rest (221) jedes Phasenpaars der drei Phasen (101 - 103) minimiert; und
den Smart Meter an die eine Phase (101 - 103) der drei Phasen (101 - 103) digital zuzuweisen, der die Summe der sich ergebenden Reste (222) aller Phasenpaare der drei Phasen (101 - 103) minimiert.

12. Vorrichtung nach Anspruch 10, wobei der wenigstens eine Prozessor konfiguriert ist, um für jeden Smart Meter der mehreren Smart Meter (111 - 114):

den Smart Meter der mehreren Smart Meter (111 - 114) digital auszuwählen, der die Summe mittleren Scheitelfaktoren (233, 234) der drei Phasen (101 - 103) in Bezug auf jede andere Summe mittlerer Scheitelfaktoren (233, 234) der drei Phasen (101 - 103), die sich aus der Zuweisung jedes nicht zugewiesenen Smart Meters der mehreren Smart Meter (111 - 114) an jede Phase (101 - 103) der drei Phasen (101 - 103) ergeben würde, minimiert; und
den Smart Meter an die eine Phase (101 - 103) der drei Phasen (101 - 103) digital zuzuweisen, welche die Summe der sich ergebenden mittleren Scheitelfaktoren (233, 234) der drei Phasen (101 - 103) minimiert.

13. System für die Zuweisung mehrerer Smart Meter (111 - 114) an Phasen (101 - 103) einer Verteilungseinspeisung (100), die drei Phasen aufweist, wobei jeder Smart Meter (111 - 114) ein zugehöriges elektrisches Lastmuster (116 - 119, 256) aufweist, wobei das System aufweist:

eine erste Vorrichtung nach einem der Ansprüche 10 - 12; und
eine zweite Vorrichtung (300), die aufweist:

ein erstes Modul (321), das konfiguriert ist, um die mehreren Smart Meter (111 - 114) mit Phasen (101 - 103) der Verteilungseinspeisung (100) zu verbinden, und ferner ihre elektrischen Verbindungen umzuschalten; und
ein zweites Modul (331), das konfiguriert ist, um Daten von der ersten Vorrichtung zu empfangen.

**Revendications**

1.  Procédé (150, 160, 170) pour assigner une pluralité de compteurs intelligents (111-114) à des phases (101-103) d'un câble de distribution (100) comprenant trois phases (101-103), chaque compteur intelligent (111-114) ayant une courbe de charge électrique (116-119, 256) qui lui est associée, le procédé comprenant les étapes consistant à :

    pour chaque compteur intelligent de la pluralité de compteurs intelligents (111-114), assigner (154, 155) le compteur intelligent à une phase (101-103) des trois phases (101-103) qui minimise l'une parmi :

    une somme des résidus (222) de toutes les paires de phases des trois phases (101-103) résultant de l'assignation de la courbe de charge électrique (116-119, 256) du compteur intelligent à ladite phase (101-103), chaque résidu de la somme des résidus (222) étant une valeur scalaire correspondant à la racine carrée d'une valeur moyenne d'une série chronologique de valeurs discrètes d'un résidu de la paire de phases respective ; et

    une somme des facteurs de crête moyens (233, 234) des trois phases (101-103) résultant de l'assignation de la courbe de charge électrique (116-119, 256) du compteur intelligent à ladite phase (101-103), chaque facteur de crête moyen de la somme des facteurs de crête moyens (233, 234) étant une valeur moyenne d'une série de facteurs de crête de la phase respective, où chaque valeur de la série est

    $$CF_{X,i} = \frac{\left|X_{T_i}\right|_{peak}}{X_{T_i, rms}},$$

    où $CF_{X,i}$ est la i-ième valeur d'une série de facteurs de crête de la phase respective, $|X_{Ti}|_{peak}$ est une valeur de crête d'une courbe de charge électrique agrégée de la phase respective sur une période de temps $T_i$, et $X_{Ti, rms}$ est une valeur de la moyenne quadratique de la courbe de charge électrique agrégée de la phase respective sur la période de temps $T_i$ ;

    **caractérisé en ce que** :

    pour chaque compteur intelligent de la pluralité de compteurs intelligents (111-114) et avant d'assigner (154, 155) le compteur intelligent à une phase (101-103) des trois phases (101-103), sélectionner (151) le compteur intelligent de la pluralité de compteurs intelligents (111-114) qui minimise l'une parmi :

    une distance euclidienne entre la courbe de charge électrique (116-119, 256) du compteur intelligent et un résidu (221) d'une première paire de phases des trois phases (101-103) par rapport à toute autre distance euclidienne entre une courbe de charge électrique (116-119, 256) de tout compteur intelligent non assigné de la pluralité de compteurs intelligents (111-114) et un résidu (221) de toute paire de phases des trois phases (101-103), la première paire de phases comprenant ladite phase (101-103), chaque résidu (221) étant la distance euclidienne entre les courbes de charge électrique agrégées (211, 212) de la paire de phases respective ; et

    une somme des facteurs de crête moyens (233, 234) des trois phases (101-103) résultant de l'assignation de la courbe de charge électrique (116-119, 256) du compteur intelligent à ladite phase (101-103) par rapport à toute autre somme des facteurs de crête moyens (233, 234) des trois phases (101-103) résultant de l'assignation de la courbe de charge électrique (116-119, 256) de tout compteur intelligent non assigné de la pluralité de compteurs intelligents (111-114) à une phase quelconque (101-103) des trois phases (101-103) ;

    l'assignation (154, 155) du compteur intelligent à ladite phase (101-103) des trois phases (101-103) minimisant :

    la somme des résidus (222) de toutes les paires de phases des trois phases (101-103) si le compteur intelligent a été sélectionné (151) de telle sorte que la distance euclidienne soit minimisée (152) ; ou la somme des facteurs de crête moyens (233, 234) des trois phases (101-103) si le compteur intelligent a été sélectionné (151) de telle sorte que la somme des facteurs de crête moyens résultants (233, 234) soit minimisée (153).

2.  Procédé (150, 160, 170) selon la revendication 1, dans lequel la sélection (151) du compteur intelligent de la pluralité de compteurs intelligents (111-114) et l'assignation (154, 155) du compteur intelligent à ladite phase (101-103) des trois phases (101-103) sont effectuées numériquement avec un algorithme glouton.

3. Procédé (160) selon l'une des revendications 1-2, dans lequel :

la sélection (161) du compteur intelligent de la pluralité de compteurs intelligents (111-114) minimise une distance euclidienne entre la courbe de charge électrique (116-119, 256) du compteur intelligent et le résidu (221) de la première paire de phases des trois phases (101-103) par rapport à toute autre distance euclidienne entre la courbe de charge électrique (116-119, 256) de tout compteur intelligent non assigné de la pluralité de compteurs intelligents (111-114) et le résidu (221) de toute paire de phases des trois phases (101-103) ; et

l'assignation (154) du compteur intelligent à ladite phase (101-103) des trois phases (101-103) est effectuée de telle sorte que la somme des résidus résultants (222) de toutes les paires de phases des trois phases (101-103) soit minimisée.

4. Procédé (170) selon l'une des revendications 1-2, dans lequel :

la sélection (171) du compteur intelligent de la pluralité de compteurs intelligents (111-114) minimise la somme des facteurs de crête moyens résultants (233, 234) des trois phases (101-103) par rapport à toute autre somme de facteurs de crête moyens (233, 234) des trois phases (101-103) qui résulterait de l'assignation de tout compteur intelligent non assigné de la pluralité de compteurs intelligents (111-114) à toute phase (101-103) des trois phases (101-103) ; et

l'assignation (155) du compteur intelligent à ladite phase (101-103) des trois phases (101-103) est effectuée de telle sorte que la somme des facteurs de crête moyens résultants (233, 234) des trois phases (101-103) soit minimisée.

5. Procédé (150, 160, 170) de l'une quelconque des revendications 1-3, comprenant en outre les étapes consistant à :

pour chaque paire de phases des trois phases (101-103) et pour chaque compteur intelligent (111-114) de la pluralité de compteurs intelligents (111-114) assignés à l'une des phases (101-103) de celle-ci, calculer la distance euclidienne entre la courbe de charge électrique (116-119, 256) du compteur intelligent (111-114) et un résidu (221) de la paire de phases ; et

sélectionner le compteur intelligent (111-114) de la courbe de charge électrique (116-119, 256) avec la distance euclidienne minimale et assigner le compteur intelligent (111-114) à l'autre phase (101-103) de la paire de phases si le résidu résultant (222) de la paire de phases diminue.

6. Procédé (150, 160, 170) selon l'une quelconque des revendications 1-5, comprenant en outre l'étape consistant à : pour chaque compteur intelligent (111-114) de la pluralité de compteurs intelligents (111-114), obtenir la courbe de charge électrique (116-119, 256) qui lui est associée.

7. Procédé (150, 160, 170) selon la revendication 6, comprenant en outre l'étape consistant à : avant de commencer à assigner (154, 155) des compteurs intelligents non assignés de la pluralité de compteurs intelligents (111-114) à des phases (101-103) du câble de distribution (100), déconnecter au moins un compteur intelligent (111-114) connecté à une phase (101-103) du câble de distribution (100), produisant ainsi au moins un compteur intelligent non assigné.

8. Procédé (150, 160, 170) selon l'une quelconque des revendications 1-7, comprenant en outre l'étape consistant à connecter chaque compteur intelligent (111-114) de la pluralité de compteurs intelligents (111-114) à la phase (101-103) assignée.

9. Procédé selon la revendication 1, dans lequel l'assignation (154, 155) du compteur intelligent à ladite phase (101-103) des trois phases (101-103) est effectuée en exécutant un algorithme d'optimisation multi-objectif pour assigner chaque compteur intelligent de la pluralité de compteurs intelligents (111-114) à une phase (101-103) des trois phases (101-103), l'algorithme d'optimisation multi-objectif minimisant :

la somme des résidus (222) de toutes les paires de phases des trois phases (101-103) lors de l'assignation de tous les compteurs intelligents aux phases (101-103) des trois phases (101-103) ; et

la somme des facteurs de crête moyens (233, 234) des trois phases (101-103) lors de l'assignation de tous les compteurs intelligents aux phases (101-103) des trois phases (101-103) ; et

lors de l'assignation de tous les compteurs intelligents aux phases des trois phases, la somme des résidus (222) et la somme des facteurs de crête moyens (233, 234) étant non dominées (281) dans une frontière de Pareto.

**10.** Dispositif pour assigner une pluralité de compteurs intelligents (111-114) à des phases (101-103) d'un câble de distribution (100) comprenant trois phases (101-103), chaque compteur intelligent (111-114) ayant une courbe de charge électrique (116-119, 256) qui lui est associée, le dispositif comprenant :
au moins un processeur configuré pour assigner numériquement, pour chaque compteur intelligent de la pluralité de compteurs intelligents (111-114), le compteur intelligent à une phase (101-103) des trois phases (101-103) qui minimise l'une parmi :

une somme de résidus (222) de toutes les paires de phases des trois phases (101-103) résultant de l'assignation de la courbe de charge électrique (116-119, 256) du compteur intelligent à ladite phase (101-103), chaque résidu de la somme des résidus (222) étant une valeur scalaire correspondant à une valeur moyenne quadratique d'une série chronologique de valeurs discrètes d'un résidu de la paire de phases respective ; et
une somme de facteurs de crête moyens (233, 234) des trois phases (101-103) résultant de l'assignation de la courbe de charge électrique (116-119, 256) du compteur intelligent à ladite phase (101-103), chaque facteur de crête moyen de la somme des facteurs de crête moyens (233, 234) étant une valeur moyenne d'une série de facteurs de crête de la phase respective où chaque valeur de la série est

$$CF_{X,i} = \frac{\left| X_{T_i} \right|_{peak}}{X_{T_i,rms}}$$

où CF$_{x,i}$ est la i-ième valeur d'une série de facteurs de crête de la phase respective,

$|X_{Ti}|_{peak}$ est une valeur de crête d'une courbe de charge électrique agrégée de la phase respective sur une période de temps $T_i$, et $X_{Ti,rms}$ est une valeur de la moyenne quadratique de la courbe de charge électrique agrégée de la phase respective sur la période de temps $T_i$ ;
**caractérisé en ce que** :

ledit au moins un processeur est en outre configuré pour sélectionner numériquement, pour chaque compteur intelligent de la pluralité de compteurs intelligents (111-114) et avant d'assigner le compteur intelligent ladite phase (101-103) des trois phases (101-103), le compteur intelligent de la pluralité de compteurs intelligents (111-114) qui minimise l'une parmi :

une distance euclidienne entre la courbe de charge électrique (116-119, 256) du compteur intelligent et un résidu (221) d'une première paire de phases des trois phases (101-103) par rapport à toute autre distance euclidienne entre une courbe de charge électrique (116-119, 256) de tout compteur intelligent non assigné de la pluralité de compteurs intelligents (111-114) et un résidu (221) de toute paire de phases des trois phases (101-103), la première paire de phases comprenant ladite phase (101-103), chaque résidu (221) étant la distance euclidienne entre les courbes de charge électrique agrégées (211, 212) de la paire de phases respective ; et
une somme des facteurs de crête moyens (233, 234) des trois phases (101-103) résultant de l'assignation de la courbe de charge électrique (116-119, 256) du compteur intelligent à ladite phase (101-103) par rapport à toute autre somme des facteurs de crête moyens (233, 234) des trois phases (101-103) résultant de l'assignation de la courbe de charge électrique (116-119, 256) de tout compteur intelligent non assigné de la pluralité de compteurs intelligents (111-114) à une phase quelconque (101-103) des trois phases (101-103) ;

l'assignation numérique du compteur intelligent à ladite phase (101-103) des trois phases (101-103) minimisant :

la somme des résidus (222) de toutes les paires de phases des trois phases (101-103) si le compteur intelligent a été sélectionné numériquement de telle sorte que la distance euclidienne soit minimisée ; ou
la somme des facteurs de crête moyens (233, 234) des trois phases (101-103) si le compteur intelligent a été sélectionné numériquement de telle sorte que la somme des facteurs de crête moyens résultants (233, 234) soit minimisée.

**11.** Dispositif selon la revendication 10, dans lequel ledit au moins un processeur est configuré pour, pour chaque compteur intelligent de la pluralité de compteurs intelligents (111-114), :

sélectionner numériquement le compteur intelligent de la pluralité de compteurs intelligents (111-114) qui minimise la distance euclidienne entre la courbe de charge électrique (116-119, 256) du compteur intelligent et le résidu (221) de la première paire de phases des trois phases (101-103) par rapport à toute autre distance euclidienne entre la courbe de charge électrique (116-119, 256) de tout compteur intelligent non assigné de la pluralité de compteurs intelligents (111-114) et un résidu (221) de toute paire de phases des trois phases (101-103) ; et

assigner numériquement le compteur intelligent à ladite phase (101-103) des trois phases (101-103) qui minimise la somme des résidus résultants (222) de toutes les paires de phases des trois phases (101-103).

12. Dispositif de la revendication 10, dans lequel ledit au moins un processeur est configuré pour, pour chaque compteur intelligent de la pluralité de compteurs intelligents (111-114) :

sélectionner numériquement le compteur intelligent de la pluralité de compteurs intelligents (111-114) qui minimise la somme des facteurs de crête moyens (233, 234) des trois phases (101-103) par rapport à toute autre somme des facteurs de crête moyens (233, 234) des trois phases (101-103) qui résulterait de l'assignation de tout compteur intelligent non assigné de la pluralité de compteurs intelligents (111-114) à toute phase (101-103) des trois phases (101-103) ; et

assigner numériquement le compteur intelligent à ladite phase (101-103) des trois phases (101-103) qui minimise la somme des facteurs de crête moyens résultants (233, 234) des trois phases (101-103).

13. Système pour assigner une pluralité de compteurs intelligents (111-114) aux phases (101-103) d'un câble de distribution (100) comprenant trois phases (101-103), chaque compteur intelligent (111-114) ayant une courbe de charge électrique (116-119, 256) qui lui est associée, le système comprenant :

un premier dispositif selon l'une quelconque des revendications 10-12 ; et
un second dispositif (300) comprenant :

un premier module (321) configuré pour connecter électriquement la pluralité de compteurs intelligents (111-114) à des phases (101-103) du câble de distribution (100), et configuré en outre pour commuter les connexions électriques de ceux-ci ; et
un deuxième module (331) configuré pour recevoir des données du premier dispositif.

**FIG. 1**

EP 3 502 627 B1

150

151

SELECT UNASSIGNED
SMART METER
SUCH THAT

152

153

| ASSOCIATED ELECTRICAL LOAD PATTERN MAKES EUCLIDEAN DISTANCE TO BE MINIMUM | ASSOCIATED ELECTRICAL LOAD PATTERN WOULD MAKE SUM OF MEAN CREST FACTORS TO BE MINIMUM |

| ASSIGN SELECTED SMART METER TO ONE PHASE SUCH THAT ASSOCIATED ELECTRICAL LOAD PATTERN MAKES SUM OF RESIDUALS TO BE MINIMUM | ASSIGN SELECTED SMART METER TO ONE PHASE SUCH THAT ASSOCIATED ELECTRICAL LOAD PATTERN MAKES SUM OF MEAN CREST FACTORS TO BE MINIMUM |

154

155

# FIG. 2

**FIG. 3**

**FIG. 4**

**FIG. 5**

EP 3 502 627 B1

**FIG. 6A**

FIG. 6B

FIG. 6C

FIG. 6D

FIG. 7

**FIG. 8**

EP 3 502 627 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016315469 A1
- US 2012175951 A1

- US 2014031997 A1

**Non-patent literature cited in the description**

- **LI XIAOMING et al.** The statistical algorithm of simultaneity coefficient based on real-time data of typical customers from power measurement system. *Proceedings. International Conference on Power System Technology,* 2002, vol. 4, 2247-2250